# EUROPEAN PATENT APPLICATION

(11) **EP 4 756 993 A1**
(43) Date of publication of application: **10.06.2026**
(21) Application number: 24857809.8
(22) Date of filing: 29.04.2024
(51) Int. Cl.: H01M 10/613, H02J 7/00

(54) **ENERGY STORAGE DEVICE, OPTICAL STORAGE SYSTEM, AND CHARGING NETWORK**

(30) Priority: 25.08.2023 CN 202311086912
(71) Applicant: Huawei Digital Power Technologies Co., Ltd., Shenzhen, Guangdong 518043 (CN)
(72) Inventor: LI, Malin, Shenzhen, Guangdong 518043 (CN); LIU, Huan, Shenzhen, Guangdong 518043 (CN); LI, Zhaohui, Shenzhen, Guangdong 518043 (CN)
(74) Representative: Gill Jennings & Every LLP
(86) International application number: PCT/CN2024/090660
(87) International publication number: WO 2025/044259

(57) **Abstract**

This application provides an energy storage apparatus, a photovoltaic energy storage system, and a charging network. The energy storage apparatus includes a first load, a second load, a heat management assembly, a heat dissipation assembly, and a compressor. The heat management assembly includes a first heat exchanger and a valve body assembly. The first heat exchanger in the heat management assembly includes a first heat exchange channel and a second heat exchange channel. The first heat exchange channel, a first heat exchange component, and a second heat exchange component are all connected to the valve body assembly through different interfaces. A heat sink in the heat dissipation assembly is connected to the valve body assembly through a third pair of interfaces. The compressor and the second heat exchanger that are connected in series to each other are connected in series to the second heat exchange channel through a fourth pair of interfaces. The valve body assembly is provided with a plurality of valve ports that are switchable for communication, to connect or disconnect a connection passage among the first heat exchange component, the second heat exchange component, the first heat exchange channel, and the heat sink, to form a plurality of heat exchange paths. The energy storage apparatus heats or cools a battery in different heat exchange manners in different temperature environments.

## Description

### CROSS-REFERENCE TO RELATED APPLICATIONS

This application claims priority to Chinese Patent Application No. 202311086912.0, filed with the China National Intellectual Property Administration on August 25, 2023 and entitled "ENERGY STORAGE APPARATUS, PHOTOVOLTAIC ENERGY STORAGE SYSTEM, AND CHARGING NETWORK", which is incorporated herein by reference in its entirety.

### TECHNICAL FIELD

This application relates to the energy storage field, and specifically, to an energy storage apparatus, a photovoltaic energy storage system, and a charging network.

### BACKGROUND

Electrochemical energy storage is widely utilized across industrial and commercial parks, office buildings, power stations, or the like. To allow for layout flexibility, a battery module, a battery management system (battery management system, BMS), a power conversion system (power conversion system, PCS), a power distribution system, a fire extinguishing system, and the like may be usually integrated into a cabinet to form an energy storage apparatus. As an important part of battery energy storage systems, the energy storage apparatus has been widely used in the fields of new energy, smart grid, energy saving technologies, and the like. Through charging and discharging operations of a battery in the energy storage apparatus, functions such as peak shaving and valley filling, improving electric energy quality, acting as a backup power supply, and adjusting a frequency to participate in smart grid construction are implemented. Generally, the energy storage apparatus is in a charging or discharging state for short duration, and is in a standby state most of the time. When the battery is in the standby state, a temperature of the battery also needs to be managed, to prevent a problem that the battery cannot be started or fails due to an excessively low temperature or an excessively high temperature. An existing energy storage apparatus usually provides only functions such as natural cooling or refrigeration assembly cooling, or an additional heating component needs to be separately disposed for heating the battery. As a result, the existing energy storage apparatus cannot achieve a comprehensive effect of natural air cooling, refrigeration assembly cooling, and low-temperature heating through a single system.

### SUMMARY

This application provides an energy storage apparatus, a photovoltaic energy storage system, and a charging network, so that the energy storage apparatus can heat or cool a battery in different heat exchange manners in different temperature environments.

According to a first aspect, this application provides an energy storage apparatus. The energy storage apparatus includes a first load, a second load, a heat management assembly, a heat dissipation assembly, and a compressor. A first heat exchange component is disposed in the first load, and a second heat exchange component is disposed in the second load. The heat management assembly is provided with at least four pairs of interfaces, and includes a first heat exchanger and a valve body assembly. The first heat exchanger includes a first heat exchange channel and a second heat exchange channel. The first heat exchange channel is connected to the valve body assembly, the first heat exchange component is connected to the valve body assembly through a first pair of interfaces, and the second heat exchange component is connected to the valve body assembly through a second pair of interfaces. The heat dissipation assembly includes a heat sink and a second heat exchanger, and the heat sink is connected to the valve body assembly through a third pair of interfaces. The compressor is connected in series to the second heat exchanger, and the compressor and the second heat exchanger are connected in series to the second heat exchange channel through a fourth pair of interfaces. The valve body assembly is provided with a plurality of valve ports that are switchable for communication, to connect or disconnect a connection passage among the first heat exchange component, the second heat exchange component, the first heat exchange channel, and the heat sink, to form a plurality of heat exchange paths.

The energy storage apparatus in this application may heat or cool two loads. The first heat exchange channel is connected to the valve body assembly, and the first heat exchange component, the second heat exchange component, and the heat sink are all connected to the valve body assembly through different interfaces. The valve body assembly is provided with the plurality of valve ports that are switchable for communication. Different connection relationships among the first load, the second load, the first heat exchange channel, and the heat sink may be implemented through conversion of connections between the plurality of valve ports in the valve body assembly, so that different serial-parallel connection loops can be formed among the four components, thereby forming different heat exchange paths. In addition, the compressor, the second heat exchange channel, and the second heat exchanger are used to form a refrigerating loop or a heating loop. In this case, a connection relationship between valve ports of the valve body assembly and a reversing channel in the reversing assembly may be changed based on an external ambient temperature, to implement conversion of a plurality of heating or cooling manners, for example, conversion in a plurality of manners such as cooling or heating the first load through the compressor, heating or cooling or heating the first load by using natural air, and heating or cooling the first load by using heat released by the second load.

The first load is a battery module, the battery module further includes a battery, and the battery is in contact with and connected to the first heat exchange component. The second load is a power assembly, the power assembly further includes a power circuit, and the power circuit is in contact with and connected to the second heat exchange component. The power circuit may be, for example, a component like a BMS or a PCS.

In an optional implementation, the valve body assembly includes a first four-way valve and a second four-way valve. Three of four valve ports of each of the first four-way valve and the second four-way valve are respectively connected to an interface for connecting to the first heat exchange component, an interface for connecting to the second heat exchange component, and an interface for connecting to the heat sink, and one remaining valve port of the four valve ports of each of the first four-way valve and the second four-way valve is connected to one end of the first heat exchange channel.

When the heat management assembly includes at least four operating states, details are as follows:

The heat management assembly is in a first operating state, one end of the first heat exchange component is connected to one end of the first heat exchange channel through the first four-way valve, the other end of the first heat exchange component is connected to the other end of the first heat exchange channel through the second four-way valve, one end of the second heat exchange component is connected to one end of the heat sink through the first four-way valve, and the other end of the second heat exchange component is connected to the other end of the heat sink through the second four-way valve. In this operating state, the first heat exchange component and the first heat exchange channel form a first heat exchange loop, the second heat exchange component and the heat sink form a second heat exchange loop, and the compressor and the second heat exchange channel form a third heat exchange loop. A heat exchange medium in the first heat exchange loop and a heat exchange medium in the third heat exchange loop exchange heat. The compressor is in a refrigerating state, to cool the first load. The compressor is in a heating state, to heat the first load. In addition, heat in the second heat exchange loop may be naturally cooled through the heat sink. Moreover, in this connection manner, the compressor may be in a stopped state, and when a temperature is low in winter, the first load may be heated through an electric heater disposed between the first heat exchange component and the second four-way valve.

The heat management assembly is in a second operating state, one end of the first heat exchange component is connected to one end of the heat sink through the first four-way valve, the other end of the first heat exchange component is connected to one end of the second heat exchange component through the second four-way valve, the other end of the second heat exchange component is connected to one end of the first heat exchange channel through the first four-way valve, and the other end of the first heat exchange channel is connected to the other end of the heat sink through the second four-way valve. In this operating state, the compressor may be in a shutdown state. A heat exchange loop connected in series may be formed among the first heat exchange component, the second heat exchange component, the first heat exchange channel, and the heat sink. A heat exchange medium in the heat exchange loop implements natural cooling through the heat sink.

The heat management assembly is in a third operating state, one end of the first heat exchange component is connected to one end of the second heat exchange component through the first four-way valve, the other end of the second heat exchange component is connected to the other end of the first heat exchange component through the second four-way valve, one end of the first heat exchange channel is connected to one end of the heat sink through the first four-way valve, and the other end of the first heat exchange channel is connected to the other end of the heat sink through the second four-way valve. In this operating state, the compressor may be in a shutdown state. The first heat exchange component is connected in series to the second heat exchange component, and the first heat exchanger is in a state of stopping heat exchange. In this connection manner, the first load may be directly heated by using heat generated by the second load.

The heat management assembly is in a fourth operating state, one end of the first heat exchange component is connected to one end of the first heat exchange channel through the first four-way valve, the other end of the first heat exchange component is connected to one end of the second heat exchange component through the second four-way valve, the other end of the second heat exchange component is connected to one end of the heat sink through the first four-way valve, and the other end of the heat sink is connected to the other end of the first heat exchange channel through the second four-way valve. In this operating state, the compressor is in an operating state, the first heat exchange component, the second heat exchange component, the first heat exchange channel, and the heat sink form a first heat exchange loop connected in series, the second heat exchange channel and the compressor form a second heat exchange loop, and a heat exchange medium in the first heat exchange loop and a heat exchange medium in the second heat exchange loop exchange heat in the first heat exchanger. In this process, in addition to heating the first load through the compressor, the first load may also be heated by using heat generated by the second load.

In an optional implementation, the heat management assembly further includes a first pump and a second pump. The first pump is disposed between the first heat exchange component and the first four-way valve, and the second pump is disposed between the second heat exchange component and the second four-way valve. Flow of a heat exchange medium in the first heat exchange component is driven through the first pump. Flow of a heat exchange medium in the second heat exchange component is driven through the second pump.

In an optional implementation, the heat management assembly further includes an electric heater. The electric heater is disposed between the first heat exchange component and the first four-way valve or disposed between the first heat exchange component and the second four-way valve. An additional heating function may be achieved through the electric heater.

In an optional implementation, the valve body assembly includes one eight-way valve. Two ends of the heat sink, two ends of the first heat exchange component, two ends of the second heat exchange component, and two ends of the first heat exchange channel are connected to eight valve ports of the eight-way valve in a one-to-one correspondence.

When the valve body assembly includes only one eight-way valve, the heat management assembly includes at least four operating states. Details are as follows:

The heat management assembly is in a first operating state, one end of the first heat exchange component is connected to one end of the first heat exchange channel through the eight-way valve, the other end of the first heat exchange component is connected to the other end of the first heat exchange channel through the eight-way valve, one end of the second heat exchange component is connected to one end of the heat sink through the eight-way valve, and the other end of the second heat exchange component is connected to the other end of the heat sink through the eight-way valve. In this operating state, the first heat exchange component and the first heat exchange channel form a first heat exchange loop, the second heat exchange component and the heat sink form a second heat exchange loop, and the compressor and the second heat exchange channel form a third heat exchange loop. A heat exchange medium in the first heat exchange loop and a heat exchange medium in the third heat exchange loop exchange heat. The compressor is in a refrigerating state, to cool the first load. The compressor is in a heating state, to heat the first load. In addition, heat in the second heat exchange loop may be naturally cooled through the heat sink. Moreover, in this connection manner, the compressor may be in a stopped state, and when a temperature is low in winter, the first load may be heated through the electric heater disposed between the first heat exchange component and the second four-way valve.

The heat management assembly is in a second operating state, one end of the first heat exchange component is connected to one end of the heat sink through the eight-way valve, the other end of the first heat exchange component is connected to one end of the second heat exchange component through the eight-way valve, the other end of the second heat exchange component is connected to one end of the first heat exchange channel through the eight-way valve, and the other end of the first heat exchange channel is connected to the other end of the heat sink through the eight-way valve. In this operating state, the compressor may be in a shutdown state. A heat exchange loop connected in series may be formed among the first heat exchange component, the second heat exchange component, the first heat exchange channel, and the heat sink. A heat exchange medium in the heat exchange loop implements natural cooling through the heat sink.

The heat management assembly is in a third operating state, one end of the first heat exchange component is connected to one end of the second heat exchange component through the eight-way valve, the other end of the second heat exchange component is connected to the other end of the first heat exchange component through the eight-way valve, one end of the first heat exchange channel is connected to one end of the heat sink through the eight-way valve, and the other end of the first heat exchange channel is connected to the other end of the heat sink through the eight-way valve. In this operating state, the compressor may be in a shutdown state. The first heat exchange component is connected in series to the second heat exchange component, and the first heat exchanger is in a state of stopping heat exchange. In this connection manner, the first load may be directly heated by using heat generated by the second load.

The heat management assembly is in a fourth operating state, one end of the first heat exchange component is connected to one end of the first heat exchange channel through the eight-way valve, the other end of the first heat exchange component is connected to one end of the second heat exchange component through the eight-way valve, the other end of the second heat exchange component is connected to one end of the heat sink through the eight-way valve, and the other end of the heat sink is connected to the other end of the first heat exchange channel through the eight-way valve. In this operating state, the compressor is in an operating state, the first heat exchange component, the second heat exchange component, the first heat exchange channel, and the heat sink form a first heat exchange loop connected in series, the second heat exchange channel and the compressor form a second heat exchange loop, and a heat exchange medium in the first heat exchange loop and a heat exchange medium in the second heat exchange loop exchange heat in the first heat exchanger. In this process, in addition to heating the first load through the compressor, the first load may also be heated by using heat generated by the second load.

In an optional implementation, a first pump is disposed between the first heat exchange component and the eight-way valve, and a second pump is disposed between the second heat exchange component and the eight-way valve. Flow of a heat exchange medium in the first heat exchange component is driven through the first pump. Flow of a heat exchange medium in the second heat exchange component is driven through the second pump.

In an optional implementation, the heat management assembly further includes an electric heater. The electric heater is disposed between the first heat exchange component and the eight-way valve. An additional heating function may be achieved through the electric heater.

In an optional implementation, the heat management assembly further includes a first throttle valve, and the first throttle valve is connected in series to the second heat exchange channel. The first throttle valve is disposed, so that a flow speed of the heat exchange medium in the second heat exchange channel may be controlled through the first throttle valve. The flow speed of the heat exchange medium in the second heat exchange channel is controlled, so that heat exchange efficiency can be controlled.

In an optional implementation, the heat management module further includes a dehumidification module and a second throttle valve. The dehumidification module and the first heat exchanger are disposed in parallel, and the dehumidification module is connected in series to the second throttle valve. The second throttle valve is disposed, so that a flow speed of a heat exchange medium in the dehumidification module may be controlled through the second throttle valve. The flow speed of the heat exchange medium in the dehumidification module is controlled, so that dehumidification efficiency can be controlled.

In an optional implementation, the temperature control system further includes a reversing assembly. The compressor is connected in series to the second heat exchanger through the reversing assembly. The reversing assembly has at least two switchable medium flow paths to change a flow direction of a heat exchange medium flowing from the compressor to the second heat exchange channel. The reversing assembly may change the flow direction of the heat exchange medium from the compressor to the second heat exchange channel through the two switchable medium flow paths, so that the heat exchange medium can flow clockwise or counterclockwise, to heat or cool a heat exchange medium in the first heat exchange channel by using the heat exchange medium in the second heat exchange channel, thereby cooling or heating the first load and the second load in different heat exchange manners. When the heat exchange medium in the first heat exchange channel is cooled, the reversing assembly is disposed, to cause a flow direction of the heat exchange medium in the second heat exchange channel to be opposite to a flow direction of the heat exchange medium in the first heat exchange channel. When the heat exchange medium in the first heat exchange channel is heated, the reversing assembly is disposed, to cause a flow direction of the heat exchange medium in the second heat exchange channel to be the same as a flow direction of the heat exchange medium in the first heat exchange channel. In this way, efficient heat exchange can be implemented in different heat exchange modes.

In an optional implementation, the reversing assembly includes a reversing valve. The reversing valve is provided with a first valve port, a second valve port, a third valve port, and a fourth valve port. The first valve port is connected to the interface of the heat management assembly, the second valve port is connected to the second heat exchanger, and the third valve port and the fourth valve port are respectively connected to two ends of the compressor. The first valve port and the second valve port may respectively switchable for communication with the third valve port and the fourth valve port, to form two switchable heat exchange channels.

When the heat exchange module has the foregoing structure, the reversing assembly includes two operating states. Details are as follows:

The reversing assembly is in a first operating state. The first valve port is connected to the third valve port, and the second valve port is connected to the fourth valve port. A heat exchange medium refrigerated by the compressor may flow from the reversing assembly to the second heat exchange channel in a counterclockwise direction.

The reversing assembly is in a second operating state. The first valve port is connected to the fourth valve port, and the second valve port is connected to the third valve port. A heat exchange medium heated by the compressor may flow from the reversing assembly to the second heat exchange channel in a clockwise direction.

The counterclockwise direction and the clockwise direction are interchangeable, and may be specifically determined based on the flow direction of the heat exchange medium in the first heat exchange channel.

In an optional implementation, the reversing assembly further includes a bypass valve connected in parallel to the compressor. When the compressor is in the heating state, the bypass valve may be switched on to reduce pressure of the compressor, to prevent the compressor from being faulty. When the compressor is the refrigerating state, the bypass valve may be switched off.

In an optional implementation, the heat management assembly is provided with a first housing. The first heat exchanger, the valve body assembly, the electric heater, the first pump, the second pump, the first throttle valve, the dehumidification module, and the second throttle valve are all disposed in the first housing, and the at least four pairs of interfaces are disposed on the first housing. Components of the heat management assembly are integrated into the first housing, so that modular connection of the heat management assembly can be implemented, and on-site assembly is facilitated during assembly.

In an optional implementation, the heat dissipation assembly is provided with a second housing, and the second heat exchanger and the heat sink are disposed in the second housing. The second housing is provided with two pairs of interfaces, one pair of interfaces communicates with the second heat exchanger, and the other pair of interfaces communicates with the heat sink. Components of the heat dissipation assembly are integrated into the second housing, so that modular connection of the heat dissipation assembly can be implemented, and on-site assembly is facilitated during assembly.

In an optional implementation, the reversing assembly is provided with a third housing, and the reversing valve and the bypass valve are disposed in the third housing. The third housing is provided with four connection ports, and valve ports of the reversing valve are connected to the connection ports of the third housing in a one-to-one correspondence. The bypass valve is connected to two of the connection ports and is connected in parallel to two valve ports of the reversing valve. Components of the reversing assembly are integrated into the third housing, so that modular connection of the reversing assembly can be implemented, and on-site assembly is facilitated during assembly.

In an optional implementation, the compressor is integrated into the first housing, and the first housing is provided with an interface for communicating with the compressor; or the compressor is integrated into the third housing, and the third housing is provided with an interface for communicating with the compressor. The compressor is integrated into the first housing of the heat management assembly or integrated into the third housing of the reversing assembly, so that the compressor can be disposed in an integrated manner. This facilitates pre-assembly and on-site mounting.

According to a second aspect, this application provides a photovoltaic energy storage system. The photovoltaic energy storage system includes a power generation device, a power conversion device, and the energy storage apparatus according to the first aspect of this application. The power conversion device is connected between the power generation device and the energy storage apparatus. The power generation device is configured to store generated electric energy into a battery of the energy storage apparatus through the power conversion device.

According to a third aspect, this application provides a charging network. The charging network includes a charging pile and the energy storage apparatus according to the first aspect of this application. The charging pile is electrically connected to the energy storage apparatus. The energy storage apparatus is configured to provide electric energy for the charging pile.

For technical effects that can be achieved in the second aspect and the third aspect, refer to corresponding effects descriptions in the first aspect. Details are not described herein again.

### BRIEF DESCRIPTION OF DRAWINGS

FIG. 1 is a diagram of a framework structure of a temperature control system according to an embodiment of this application;
FIG. 2 is a diagram of a connection structure of a temperature control system according to an embodiment;
FIG. 3 is a diagram of a temperature control principle of a temperature control system in a compressor refrigeration mode according to an embodiment;
FIG. 4 is a diagram of a temperature control principle of a temperature control system in a natural air cooling state according to an embodiment;
FIG. 5 is a diagram of a temperature control principle of a temperature control system in a heating state according to an embodiment;
FIG. 6 is a diagram of a temperature control principle of a temperature control system in a heating state according to an embodiment;
FIG. 7 is a diagram of a temperature control principle of a temperature control system in a heating state according to an embodiment;
FIG. 8 is a diagram of a temperature control principle of a temperature control system in a heating state according to an embodiment;
FIG. 9 is a diagram of a structure of a temperature control system;
FIG. 10 is a diagram of a structure of a temperature control system;
FIG. 11 is a diagram of a structure of a temperature control system;
FIG. 12 is a diagram of a structure of a temperature control system;
FIG. 13 is a diagram of a structure of a temperature control system;
FIG. 14 is a diagram of a structure of a temperature control system;
FIG. 15 is a diagram of a structure of a temperature control system;
FIG. 16 is a diagram of a modular connection structure of a temperature control system according to another embodiment of this application;
FIG. 17 is a diagram of a structure of a temperature control system;
FIG. 18 is a diagram of a structure of a temperature control system;
FIG. 19 is a diagram of a structure of a temperature control system;
FIG. 20 is a diagram of a structure of a temperature control system;
FIG. 21 is a diagram of a structure of a temperature control system;
FIG. 22 is a diagram of a structure of a temperature control system;
FIG. 23 is a diagram of a structure of a temperature control system;
FIG. 24 is a diagram of a structure of a temperature control system; and
FIG. 25 is a block diagram of a structure of a charging network according to an embodiment of this application.

### Reference numerals:

10: first load; 11: first heat exchange plate; 12: battery;
20: second load; 21: second heat exchange plate; 22: power circuit;
30: heat management assembly; 30a: first housing; 31: first heat exchanger; 311: first heat exchange channel; 312: second heat exchange channel;
32: valve body assembly; 321: first four-way valve; 322: second four-way valve; 323: eight-way valve; 33: first pump; 34: second pump;
35: first throttle valve; 36: dehumidification module; 37: second throttle valve; 38: heater; 301: first interface; 302: second interface;
303: third interface; 304: fourth interface; 305: fifth interface; 306: sixth interface; 307: seventh interface; 308: eighth interface;
40: heat dissipation assembly; 40a: second housing; 41: second heat exchanger; 42: heat sink; 43: fan;
50: reversing assembly; 50a: third housing; 51: reversing valve; 52: bypass valve;
60: compressor; 70: charging pile; 71: connector.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the foregoing", "the", and "this" of singular forms used in this specification and the appended claims of this application are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

An energy storage apparatus may be used in a plurality of application scenarios such as industrial and commercial energy storage and energy storage for a power station. For example, the industrial and commercial energy storage may include small-scale industrial and commercial energy storage (for example, a small factory), medium-scale industrial and commercial energy storage, large-scale industrial and commercial energy storage, energy storage for a photovoltaic energy storage charging station, energy storage for a small-scale or medium-scale microgrid (for example, an island), and the like. For example, the energy storage for a power station may be a wind/solar energy storage power station, a power grid storage power station, or a large-scale microgrid power station. In addition, the energy storage apparatus may be further used in application scenarios such as a data center and a vehicle charging station. A battery in the energy storage apparatus needs to be stored and operate at an appropriate temperature. When an ambient temperature is excessively high or excessively low, the battery cannot operate or a service life of the battery is shortened. For example, if the ambient temperature is excessively high, the battery may burn or explode. If the ambient temperature is excessively low and does not reach a normal startup temperature of the battery, the battery cannot be charged or discharged. To keep the battery always at the appropriate operating temperature, a heat exchange system needs to be disposed in the energy storage apparatus to ensure normal operation of the battery. Therefore, embodiments of this application provide a temperature control system, which may be used in the energy storage apparatus to perform temperature control (for example, heating or cooling) on the battery, so that the battery in the energy storage apparatus is always within an operating temperature range.

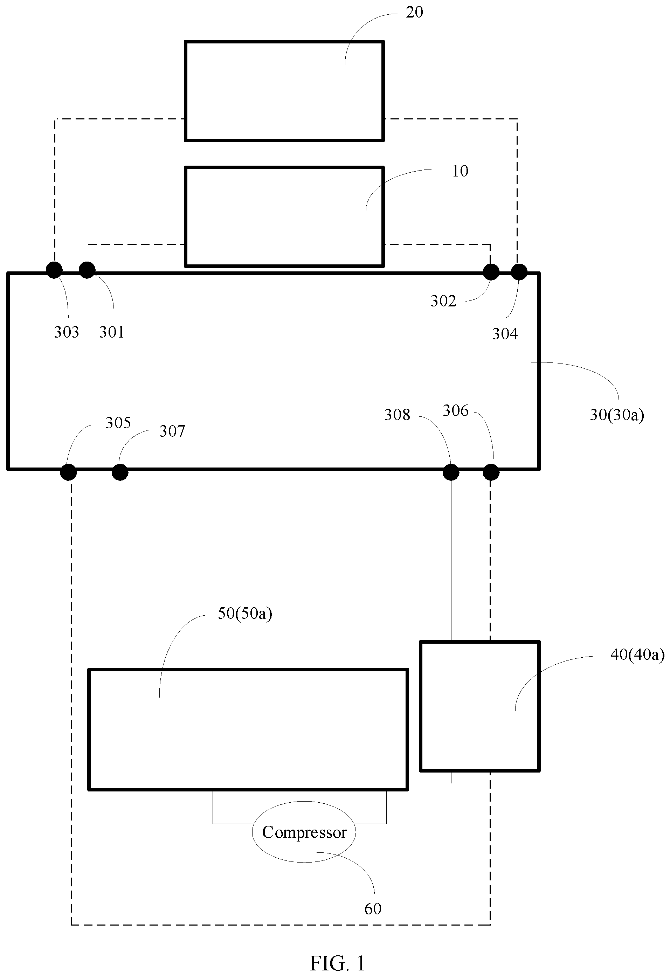

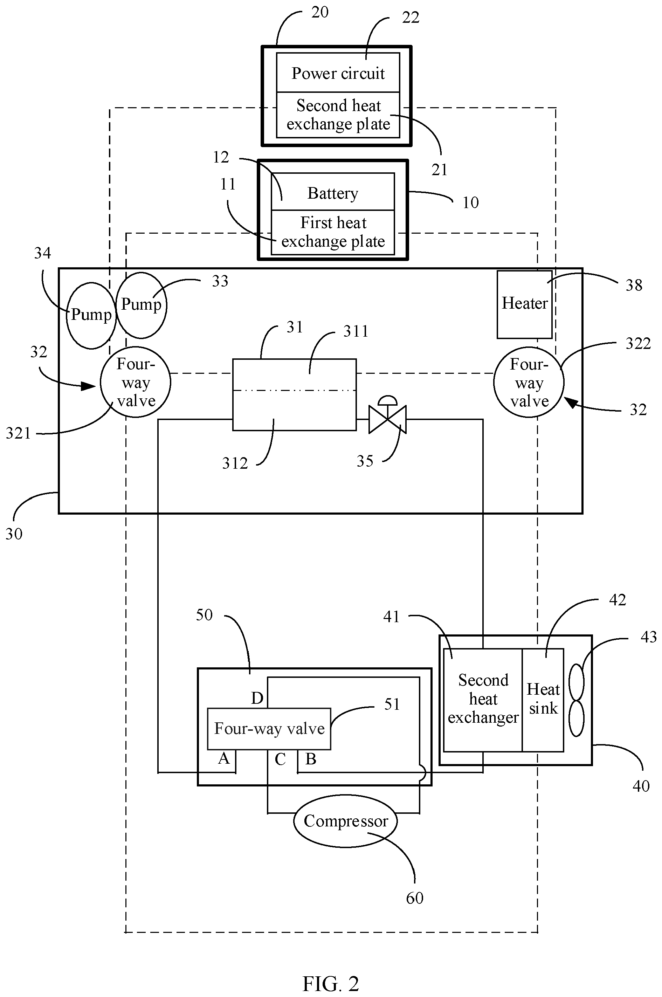

FIG. 1 is a diagram of a framework structure of a temperature control system according to an embodiment of this application. FIG. 2 is a diagram of a connection structure of a temperature control system according to an embodiment. As shown in FIG. 1 and FIG. 2, the temperature control system in this embodiment of this application includes a first load 10, a second load 20, a heat management assembly 30, a heat dissipation assembly 40, a reversing assembly 50, and a compressor 60. A first heat exchanger 31 and a valve body assembly 32 are disposed in the heat management assembly 30, and a second heat exchanger 41 and a heat sink 42 are disposed in the heat dissipation assembly 40. The first load 10 and the second load 20 may implement a plurality of forms of heat exchange loops with a first heat exchange channel 311 and the heat dissipation assembly 40 through the valve body assembly 32. In addition, a plurality of forms of heating and cooling manners may be implemented in combination with a heat exchange loop formed through connection between the compressor 60 and the reversing assembly 50. Therefore, the temperature control system in this embodiment of this application may implement switching in a multitemperature scenario through same components.

The following further describes composition and connection relationships of components of the temperature control system in this application with reference to specific embodiments.

### Embodiment 1

As shown in FIG. 2, a temperature control system in this embodiment of this application may be connected to two loads, namely, a first load 10 and a second load 20. One of the first load 10 and the second load 20 may be heated or cooled, or the two loads may be heated or cooled at the same time. Alternatively, one of the two loads may be heated, and the other one of the two loads may be cooled. This may be specifically set based on specific operating temperatures of the first load 10 and the second load 20. The first load 10 is a battery 12 module, and the second load 20 is a power assembly. The battery 12 module includes a battery 12 and a first heat exchange component. The battery 12 may include a plurality of cells. The first heat exchange component is in contact with and connected to the battery 12, for example, may be disposed at the bottom of the battery 12. The power assembly may include a power circuit 22 and a second heat exchange component. The second heat exchange component may be in contact with and connected to the power circuit 22, for example, may be disposed at the bottom of a PCS. For example, the power circuit 22 may include the PCS. The PCS may be electrically connected to the battery 12, and is configured to control charging and discharging functions of the battery 12.

The first heat exchange component and the second heat exchange component may be separately a heat exchange plate or an immersion cooling module. The following uses an example in which the first heat exchange component is a first heat exchange plate 11 and the second heat exchange component is a second heat exchange plate 21 for description.

As shown in FIG. 1 and FIG. 2, a heat management assembly 30 is provided with four pairs of interfaces. Two ends of the first heat exchange plate 11 are respectively connected to a pair of interfaces. Two ends of the second heat exchange plate 21 are respectively connected to another pair of interfaces. The heat dissipation assembly 40 is connected to still another pair of interfaces. The interfaces configured to connect to the first heat exchange plate 11, the second heat exchange plate 21, and the heat dissipation assembly 40 are all connected to a valve body assembly in the heat management assembly. Specific connection relationships are described in detail below.

The four pairs of interfaces, namely, eight interfaces, of the heat management system 30 are respectively denoted as a first interface 301, a second interface 302, a third interface 303, a fourth interface 304, a fifth interface 305, a sixth interface 306, a seventh interface 307, and an eighth interface 308. The first interface 301 and the second interface 302 are a first pair of interfaces, and are respectively connected to the two ends of the first heat exchange plate 11. The heat management assembly 30 forms a heat exchange passage with the first heat exchange plate 11 of the first load 10 through the first pair of interfaces. The third interface 303 and the fourth interface 304 are a second pair of interfaces, and are respectively connected to the two ends of the second heat exchange plate 21. The heat management assembly 30 forms a heat exchange passage with the second heat exchange plate 21 of the second load 20 through the second pair of interfaces. The fifth interface 305 and the sixth interface 306 are a third pair of interfaces, and are respectively connected to two ends of the heat dissipation assembly 40. The heat management assembly 30 forms a heat exchange passage with the heat dissipation assembly 40 through the third pair of interfaces. The seventh interface 307 and the eighth interface 308 are a fourth pair of interfaces, the seventh interface 307 is connected to a compressor 60 and a reversing assembly 50, and the eighth interface 308 is connected to the heat dissipation assembly 40. In this case, the heat management assembly 30 forms a heat exchange passage with the reversing assembly 50, the compressor 60, and the heat dissipation assembly 40 through the seventh interface 307 and the eighth interface 308. A connection relationship among the reversing assembly 50, the compressor 60, and the heat dissipation assembly 40 is described in detail below.

As shown in FIG. 1 and FIG. 2, the heat management assembly 30 may include a first heat exchanger 31 and the valve body assembly 32. The first heat exchanger 31 has a first heat exchange channel 311 and a second heat exchange channel 312. The first heat exchange channel 311 has a first pair of ports, and the second heat exchange channel 312 has a second pair of ports. One port of the first pair of ports of the first heat exchange channel 311 may communicate with at least one of the first interface 301, the third interface 303, and the fifth interface 305 of the heat management assembly 30 through the valve body assembly 32, and the other port of the first pair of ports of the first heat exchange channel 311 may communicate with at least one of the second interface 302, the fourth interface 304, and the sixth interface 306 through the valve body assembly 32. The second pair of ports of the second heat exchange channel 312 are respectively connected to the seventh interface 307 and the eighth interface 308 of the heat management assembly 30. In other words, one port of the second pair of ports is connected to the seventh interface 307, and the other port of the second pair of ports is connected to the eighth interface 308. Two ports of the first pair of ports are respectively denoted as a first port and a second port. Two ports of the second pair of ports are respectively denoted as a third port and a fourth port. The first port and the second port may be used for a first heat exchange medium to flow into or flow out of the first heat exchange channel 311. The third port and the fourth port may be used for a second heat exchange medium to flow into or flow out of the second heat exchange channel 312.

During heat exchange, the first heat exchange medium is fed into a heat exchange loop in which the first heat exchange channel 311 is located, to exchange heat with the first load 10 and the second load 20. The second heat exchange medium is fed into a heat exchange loop in which the second heat exchange channel 312 is located, to implement heat exchange of the first heat exchange medium and the second heat exchange medium in the first heat exchange channel 311 and the second heat exchange channel 312. For example, when the first heat exchange medium needs to be cooled, the first heat exchange medium may be a coolant, for example, water or glycol. The second heat exchange medium may be a refrigerant, for example, Freon or a liquid nitrogen compound. The heat exchange loop in which the first heat exchange channel 311 is located forms a coolant loop. The heat exchange loop in which the second heat exchange channel 312 is located forms a refrigerant loop.

The valve body assembly 32 may include two four-way valves, which are respectively denoted as a first four-way valve 321 and a second four-way valve 322. The first four-way valve 321 and the second four-way valve 322 are respectively disposed on two sides of the first heat exchange channel 311. Three of four valve ports of the first four-way valve 321 are respectively correspondingly connected to an interface for connecting to the first heat exchange plate 11, an interface for connecting to the second heat exchange plate 21, and an interface for connecting to a heat sink 42, and one remaining valve port of the respective four valve ports is connected to one end of the first heat exchange channel 311. In other words, three of the four valve ports of the first four-way valve 321 are respectively correspondingly connected to the first interface 301, the third interface 303, and the fifth interface 305, and the remaining valve port is connected to the end of the first heat exchange channel 311. Three of four valve ports of the second four-way valve 322 are respectively correspondingly connected to an interface for connecting to the first heat exchange plate 11, an interface for connecting to the second heat exchange plate 21, and an interface for connecting to the heat sink 42, and one remaining valve port is connected to one end of the first heat exchange channel 311. In other words, three of the four valve ports of the second four-way valve 322 are respectively correspondingly connected to the second interface 302, the fourth interface 304, and the seventh interface 307, and the remaining valve port is connected to one end of the second heat exchange channel 312.

Any valve port of the first four-way valve 321 and a remaining valve port may implement switchable connection through rotation of a valve core, and any valve port of the second four-way valve 322 and a remaining valve port may implement switchable connection through rotation of a valve core, to connect or disconnect a connection passage among the first heat exchange plate 11, the second heat exchange plate 21, the first heat exchange channel 311, and the heat dissipation assembly 40, thereby forming a plurality of heat exchange paths. Specific connections for the heat exchange paths may be described in detail in the following section for operating manners.

During heat exchange, to enable the first heat exchange medium to flow in the heat exchange loop, a pump may be connected in series in each of the heat exchange path of the first heat exchange plate 11 and the heat exchange path of the second heat exchange plate 21. For example, a first pump 33 may be connected in series between the first interface 301 and the first four-way valve 321. The first pump 33 may be used to control a circulation speed of the first heat exchange medium between the first heat exchange plate 11 and the first heat exchanger 31. A second pump 34 may be connected in series between the third interface 303 and the second four-way valve 322. The second pump 34 may be used to control the circulation speed of the first heat exchange medium between the first heat exchange plate 11 and the first heat exchanger 31.

In addition, to control a flow speed of the second heat exchange medium in the second heat exchange channel 312, a first throttle valve 35 may be connected in series between the second heat exchange channel 312 and the seventh interface 307 or between the second heat exchange channel 312 and the eighth interface 308.

Refer to FIG. 2. The heat management assembly 30 in this embodiment of this application may further include a heater 38, for example, an electric heater 38. The heater 38 may be disposed in a heat exchange loop formed between the first heat exchange channel 311 and the first heat exchange plate 11, for example, may be disposed between the second interface 302 and the second four-way valve 322. When an ambient temperature is excessively low, the electric heater 38 may be used to heat the first heat exchange medium between the first heat exchange plate 11 and the heater 38.

Still refer to FIG. 1 and FIG. 2. The heat dissipation assembly 40 includes a second heat exchanger 41 and the heat sink 42. The second heat exchanger 41 may be in contact with and connected to the heat sink 42 to implement heat exchange. The second heat exchanger 41 is provided with two interfaces, and the heat sink 42 is provided with two interfaces. The two interfaces of the heat sink 42 are respectively connected to the fifth interface 305 and the sixth interface 306 of the heat management assembly 30, to form a heat exchange passage between the heat sink 42 and the heat management assembly 30. One of the two interfaces of the second heat exchanger 41 is connected to the eighth interface 308 of the heat management assembly 30, and the other interface is connected to the seventh interface 307 of the heat management assembly 30 through the reversing assembly 50 and the compressor 60.

A fan 43 may be further disposed on a side portion of the heat sink 42 in the heat dissipation assembly 40, and the fan 43 is used to accelerate heat dissipation of the heat sink 42.

Still refer to FIG. 1 and FIG. 2. The compressor 60 is connected in series to the second heat exchanger 41 through the reversing assembly 50. The reversing assembly has at least two switchable medium flow paths to change a flow direction of a heat exchange medium flowing from the compressor 60 to the second heat exchange channel 312. As shown in FIG. 1 and FIG. 2, the reversing assembly 50 includes a reversing valve 51, and the reversing valve 51 may be a four-way valve. A first valve port of the reversing valve 51 is connected to the first heat exchange channel 311 through the seventh interface 307, a second valve port of the reversing valve 51 is connected to the eighth interface 308 through the second heat exchanger 41, and a third valve port and a fourth valve port of the reversing valve 51 are separately connected to the compressor 60. The compressor 60 is connected to the second heat exchanger 41 and the second heat exchange channel 312 through the reversing valve 51. In this case, the second heat exchanger 41, the reversing assembly 50, the compressor 60, and the second heat exchange channel 312 form a heat exchange passage.

When the reversing assembly 50 is in a first operating state, the first valve port of the reversing valve 51 is connected to the third valve port, and the second valve port is connected to the fourth valve port. In this case, a medium flow path is formed inside the reversing valve 51. When the reversing assembly 50 is in a second operating state, the first valve port is connected to the fourth valve port, and the second valve port is connected to the third valve port. In this case, another medium flow path may be formed in the reversing valve 51.

During heat exchange, the second heat exchanger 41 may be used as a condenser or an evaporator.

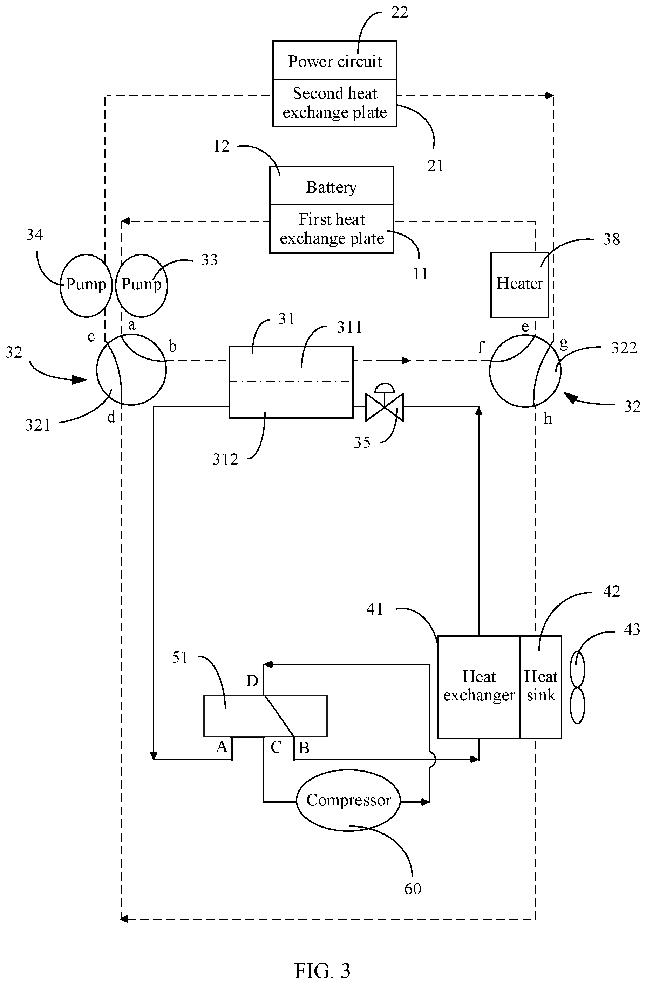

With reference to FIG. 3 to FIG. 8, the following describes connections for heat exchange loops of the temperature control system with the structure shown in FIG. 2 in different heat exchange modes. Components of the first load 10, the second load 20, the heat management assembly 30, the heat dissipation assembly 40, the compressor 60, and the reversing assembly 50 are all connected through pipes. In the accompanying drawings of the following embodiments, for ease of distinguishing between the connection pipes, a pipe for feeding the first heat exchange medium is represented by a dashed line, and a pipe for feeding the second heat exchange medium is represented by a solid line.

### Heat exchange mode 1

FIG. 3 is a diagram of a temperature control principle of a temperature control system in a compressor 60 refrigeration mode according to an embodiment. As shown in FIG. 3, when a temperature of a battery 12 in an energy storage apparatus is excessively high and the battery 12 needs to be cooled, for example, when the battery 12 is cooled during a high temperature in summer, the four valve ports of the first four-way valve 321 are connected in pairs, for example, a valve port a is connected to a valve port b, and a valve port c is connected to a valve port d, and the four valve ports of the second four-way valve 322 are connected in pairs, for example, a valve port e is connected to a valve port f, and a valve port g is connected to a valve port h. Refer to FIG. 1 together. The first port of the first heat exchanger 31 communicates with the first interface 301 through the valve port a, the valve port b, and the first pump 33. The second port of the first heat exchanger 31 is connected to the second interface 302 through the valve port e and the valve port f. The first interface 301 and the second interface 302 are separately connected to the first heat exchange plate 11. In this case, the first heat exchange plate 11, the first pump 33, the valve port a and the valve port b of the first four-way valve 321, the first heat exchanger 31, and the valve port e and the valve port f of the second four-way valve 322 form a first heat exchange loop. A first heat exchange medium in the first heat exchange loop flows in the first heat exchange loop under an action of the first pump 33. In this process, the heater 38 between the first heat exchange plate 11 and the second four-way valve 322 does not operate.

Refer to FIG. 1 and FIG. 3 together. The valve port c communicates with the third interface 303 through the second pump 34, the valve port g communicates with the fourth interface 304, the valve port d communicates with the fifth interface 305, and the valve port h communicates with the sixth interface 306. The third interface 303 and the fourth interface 304 are separately connected to the second heat exchange plate 21. The fifth interface 305 and the sixth interface 306 are separately connected to the heat sink 42. In this case, the second heat exchange plate 21, the second pump 34, the valve port c and the valve port d of the first four-way valve 321, the heat sink 42, and the valve port g and the valve port h of the second four-way valve 322 form a second heat exchange loop. A first heat exchange medium in the second heat exchange loop flows in the second heat exchange loop under an action of the second pump 34.

In a process of cooling the battery 12, the compressor 60 is in a refrigeration mode. A second heat exchange medium formed after being refrigerated by the compressor 60 is a refrigeration medium. The first valve port A and the third valve port C of the reversing valve 51 in the reversing assembly 50 are connected. The second valve port B and the second valve port D of the reversing valve 51 are connected. The second heat exchange medium cooled by the compressor 60 flows to the second heat exchanger 41 through the fourth valve port D and the second valve port B, flows to the fourth port of the first heat exchanger 31 through the second heat exchanger 41, flows out from the third port of the first heat exchanger 31 after flowing through the first heat exchanger 31, and then returns to the compressor 60 through the first valve port A and the third valve port C of the reversing valve 51. In this case, a third heat exchange loop is formed among the reversing valve 51, the compressor 60, the second heat exchanger 41, and the first heat exchanger 31.

In a cooling process, heat generated during operation of the battery 12 is absorbed by the coolant, that is, the first heat exchange medium, flowing through the first heat exchange plate 11, and a temperature of the coolant increases. The coolant whose temperature increases flows into the first heat exchange channel 311, and is absorbed by the refrigerant, that is, the second heat exchange medium, flowing through the second heat exchange channel 312, and a temperature of the second heat exchange medium increases. Then, the second heat exchange medium returns to the compressor 60, and is cooled by the compressor 60 again. The process is repeated in such a cycle to cool the battery 12.

In addition, a coolant, that is, the first heat exchange medium, flowing through the second heat exchange plate 21 absorbs heat generated by the PCS during operation, and then flows to the heat sink 42. In this case, the second heat exchanger 41 in the heat dissipation assembly 40 may be used as the condenser to cool the first heat exchange medium in the heat sink 42, and the second heat exchange medium flowing through the second heat exchanger 41 absorbs heat, to cool the first heat exchange medium in the second heat exchange loop.

### Heat exchange mode 2

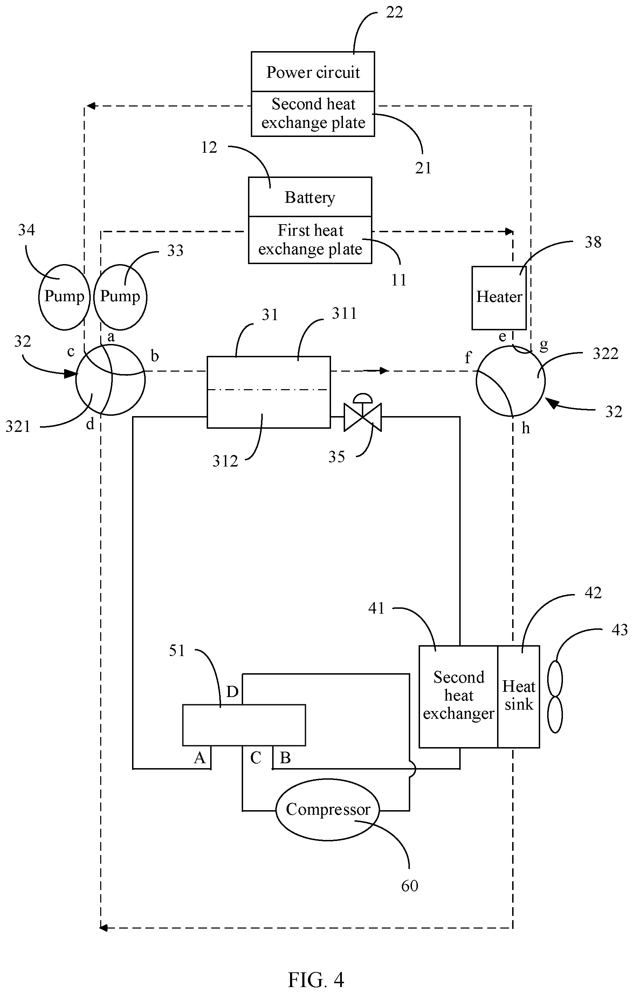

FIG. 4 is a diagram of a temperature control principle of a temperature control system in a natural air cooling state according to an embodiment. As shown in FIG. 4, when the battery 12 is cooled by using natural wind in a season, for example, spring or autumn, the heat sink 42 in the heat dissipation assembly 40 may be directly used to perform natural air cooling. In this cooling manner, the compressor stops running.

As shown in FIG. 4, the four valve ports of the first four-way valve 321 are connected in pairs. For example, a valve port a is connected to a valve port d, and a valve port b is connected to a valve port c. The four valve ports of the second four-way valve 322 are connected in pairs. For example, a valve port e is connected to a valve port g, and a valve port f is connected to a valve port h. In this case, the first port of the first heat exchanger 31 communicates with the third interface 303 through the valve port b, the valve port c, and the second pump 34. Refer to FIG. 1 together. The second port of the first heat exchanger 31 is connected to the sixth interface 306 through the valve port f and the valve port h. The valve port a communicates with the first interface 301 through the first pump 33, the valve port e communicates with the second interface 302, the valve port g communicates with the fourth interface 304, and the valve port d communicates with the fifth interface 305. The second interface 302 communicates with the fourth interface 304 the valve port g through the valve port e and the valve port g of the second four-way valve 322. The first interface 301 and the second interface 302 are separately connected to the first heat exchange plate 11. The third interface 303 and the fourth interface 304 are separately connected to the second heat exchange plate 21. The fifth interface 305 and the sixth interface 306 are separately connected to the heat sink 42. In this case, a serial heat exchange loop may be formed among the first heat exchange plate 11, the second heat exchange plate 21, the first heat exchanger 31, the first four-way valve 321, the second four-way valve 322, the first pump 33, the second pump 34, and the heat sink 42. In this heat exchange loop, a first heat exchange medium whose heat is dissipated by the heat sink 42 flows to the first heat exchange plate 11 through the valve port d and the valve port a of the first four-way valve 321 and the first pump 33 sequentially, flows to the second heat exchange plate 21 through the second interface 302, the valve port e and the valve port g of the second four-way valve 322, and the fourth interface 304 after the first heat exchange plate 11 absorbs heat of the battery 12, and flows to the second pump 34 after the second heat exchange plate 21 further absorbs heat of the PCS, and then flows to the first heat exchanger 31 through the valve port c and the valve port b of the first four-way valve 321. Because the compressor 60 does not operate in this heat dissipation mode, no heat is exchanged in the first heat exchanger 31. The first heat exchange medium flows through the first heat exchanger 31 and then passes through the valve port f and the valve port h of the second four-way valve 322, and returns to the heat sink 42 through the sixth interface 306 for air-cooled heat dissipation. The process is repeated in such a cycle to naturally cool the battery 12.

### Heat exchange mode 3

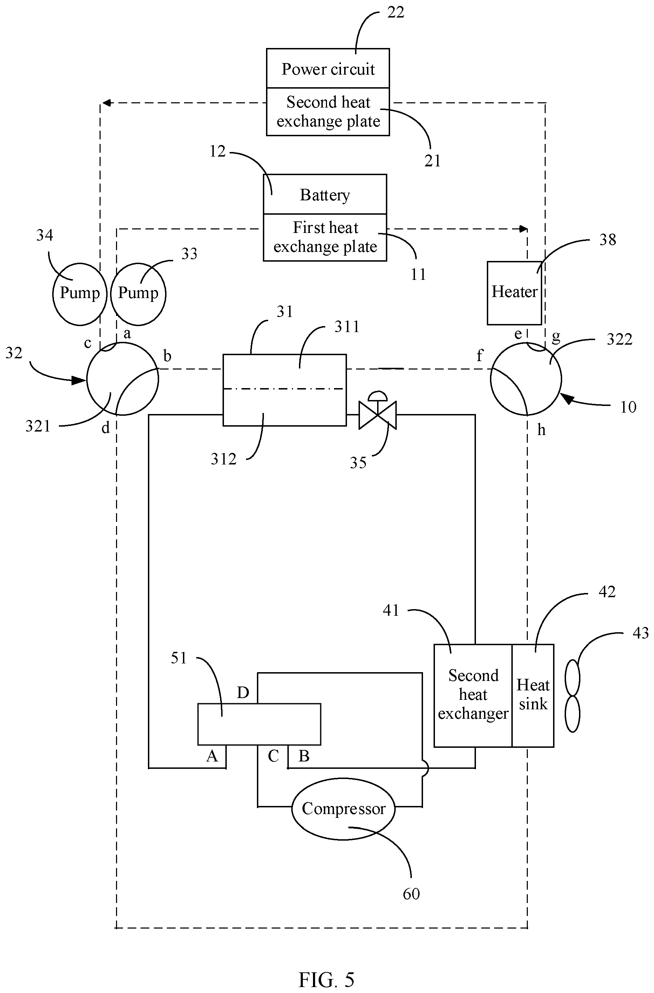

FIG. 5 is a diagram of a temperature control principle of a temperature control system in a heating state according to an embodiment. As shown in FIG. 5, a valve port a and a valve port c of the first four-way valve 321 communicate with each other, and a valve port e and a valve port g of the second four-way valve 322 communicate with each other. The first heat exchange plate 11 is connected to the second heat exchange plate 21 through the first four-way valve 321 and the second four-way valve 322 to form a heat exchange loop. In this connection manner, the battery 12 may be heated by using residual heat of the PCS, and another component does not need to participate in a heating process. The PCS may generate heat during operation. A first heat exchange medium of the second heat exchange plate 21 absorbs the heat and then flows to the second pump 34, and flows to the first pump 33 through the valve port c and the valve port a of the first four-way valve 321. The first heat exchange medium flows through the first pump 33 and then flows to the first heat exchange plate 11, where the first heat exchange plate 11 may absorb heat of the first heat exchange medium to heat the battery 12. Then, the first heat exchange medium returns to the second heat exchange plate 21 through the valve port e and the valve port g of the second four-way valve 322. In this process, the first heat exchange medium may be heated through the electric heater 38 disposed between the first heat exchange plate 11 and the second four-way valve 322, to increase a temperature of the first heat exchange medium, and further heat the battery 12.

### Heat exchange mode 4

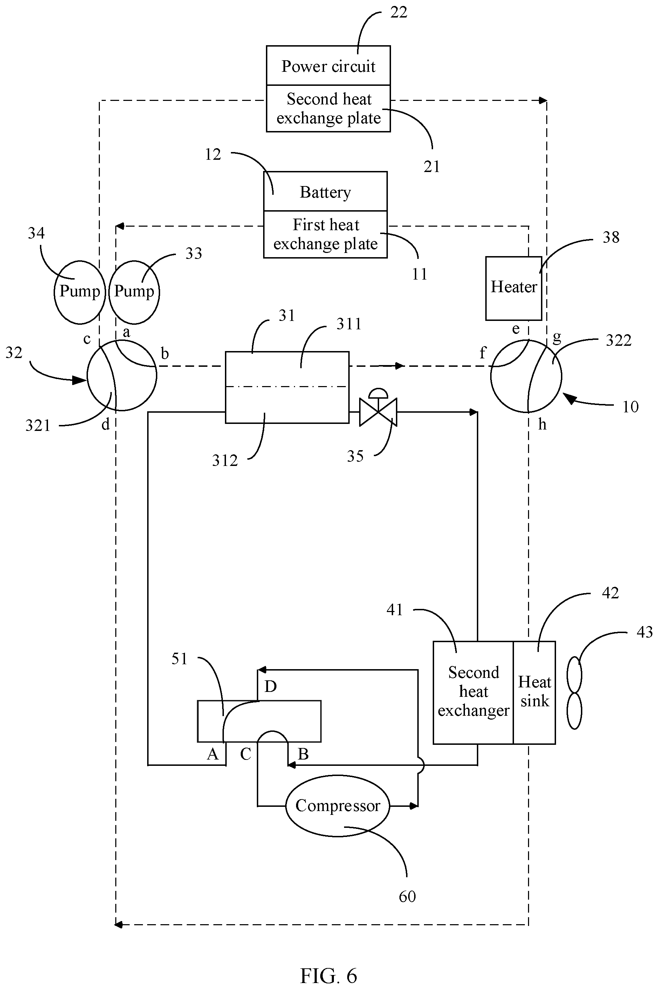

FIG. 6 is a diagram of a temperature control principle of a temperature control system in a heating state according to an embodiment. As shown in FIG. 6, when the battery 12 needs to be heated without requiring heat generated by the PCS for supplementation, a connection manner of a first heat exchange loop and a second heat exchange loop is the same as a connection manner in the cooling process shown in FIG. 3. A difference lies in that a connection manner of the reversing valve 51 in the reversing assembly 50 and the compressor 60 varies. For a connection relationship between the first heat exchange loop and the second heat exchange loop and a flow direction of the first heat exchange medium, refer to the part shown in FIG. 3. Details are not described herein again. The following specifically describes only a connection relationship of a third heat exchange loop. In the temperature control system shown in FIG. 6, a first valve port A and a fourth valve port D of the reversing valve 51 communicate with each other, and a second valve port B and a third valve port C of the reversing valve 51 communicate with each other. The compressor 60 enables a heating mode to heat a second heat exchange medium in the third heat exchange loop. The heated second heat exchange medium flows to the second heat exchange channel 312 of the first heat exchanger 31 through the fourth valve port D and the first valve port A. In the second heat exchange channel 312, the second heat exchange medium heats the first heat exchange medium in the first heat exchange channel 311, to increase a temperature of the first heat exchange medium. The first heat exchange medium transfers heat to the first heat exchange plate 11, to heat the battery 12. The second heat exchange medium in the second heat exchange channel 312 flows to the second heat exchanger 41 after passing through the first heat exchanger 31, and then returns to the compressor 60 after passing through the second heat exchanger 41. A first heat exchange medium flowing through the second heat exchange plate 21 is naturally cooled through the heat sink 42 and then is recirculated to the second heat exchange plate 21, and does not participate in a heat exchange process of the first heat exchange plate 11 and the compressor 60. In this heating process, the second heat exchange medium exchanges heat with only the first heat exchange medium in the first heat exchange loop, to heat the battery 12. A flow direction of the second heat exchange medium in the second heat exchange channel 312 is the same as a flow direction of the first heat exchange medium in the first heat exchange channel 311, to improve heat exchange efficiency and a heat exchange effect.

### Heat exchange mode 5

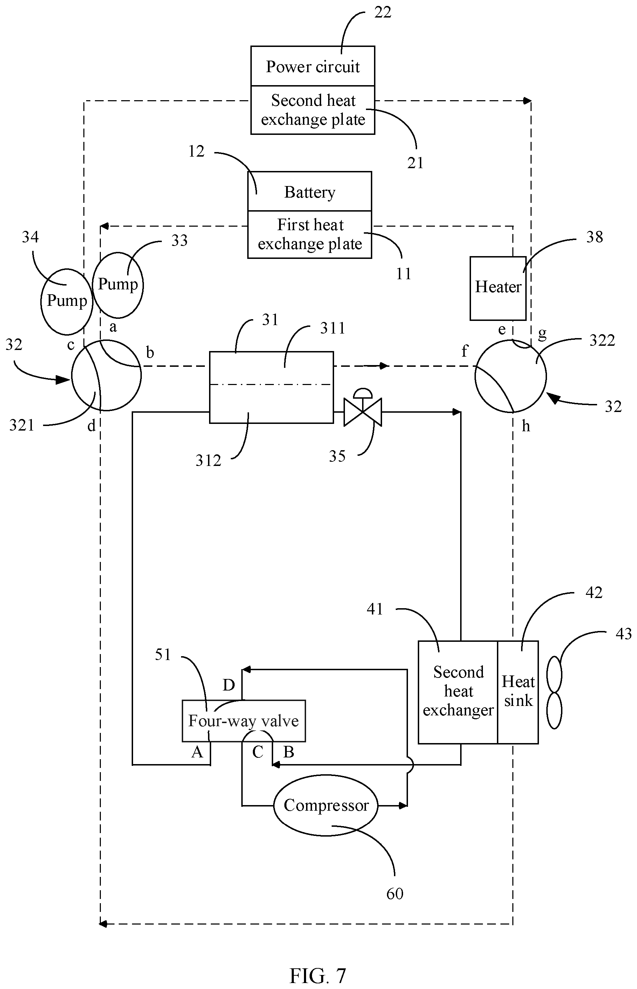

FIG. 7 is a diagram of a temperature control principle of a temperature control system in a heating state according to an embodiment. As shown in FIG. 7, in this connection manner, the battery 12 may be heated by using both heat released by the compressor 60 and heat released by the PCS. In this mode, the first heat exchange plate 11 is connected in series to the second heat exchange plate 21, and the first heat exchange plate 11 and the second heat exchange plate 21 are located in a same heat exchange loop. A connection manner of the compressor 60, the reversing valve 51, and the first heat exchanger 31 is the same as the structure shown in FIG. 6. A flow direction of the second heat exchange medium is the same as that shown in FIG. 6. Details are not described herein again. A difference lies in that a connection manner of the first heat exchange plate 11 and the second heat exchange plate 21 varies.

Refer to FIG. 7. A valve port a and a valve port b of the first four-way valve 321 communicate with each other, and a valve port c and a valve port d communicate with each other. A valve port e and a valve port g of the second four-way valve 322 communicate with each other, and a valve port f and a valve port h communicate with each other. A first heat exchange medium in the first heat exchange plate 11 flows to the first heat exchange channel 311 through the first pump 33 and the valve port a and the valve port b of the first four-way valve 321, and flows to the second four-way valve 322 after exchanging heat with a second heat exchange medium heated by the compressor 60 in the first heat exchange channel 311. The first heat exchange medium flows to the heat sink 42 through the valve port f and the valve port h of the second four-way valve 322, passes through the heat sink 42, and then flows to the second heat exchange plate 21 after flowing through the valve port d and the valve port c of the first four-way valve 321 and the second pump 34 in sequence. After obtaining residual heat of the PCS, the first heat exchange medium in the second heat exchange plate 21 flows to the first heat exchange plate 11 through the valve port e and the valve port g of the second four-way valve 322, and heat the battery 12 by using the first heat exchange plate 11. Then, the first heat exchange medium in the first heat exchange plate 11 flows to the first heat exchange channel 311 again through the first pump 33 and the valve port a and the valve port b of the first four-way valve 321 in sequence, to be heated by the second heat exchange medium in first heat exchange, so that a first heat exchange medium with a high temperature can be obtained again. The process is repeated in such a cycle to heat the battery 12.

In this process, the electric heater 38 located between the first heat exchange plate 11 and the second four-way valve 322 may be in a heating state to heat the first heat exchange medium in the first heat exchange loop, to further improve a heating effect of the battery 12.

### Heat exchange mode 6

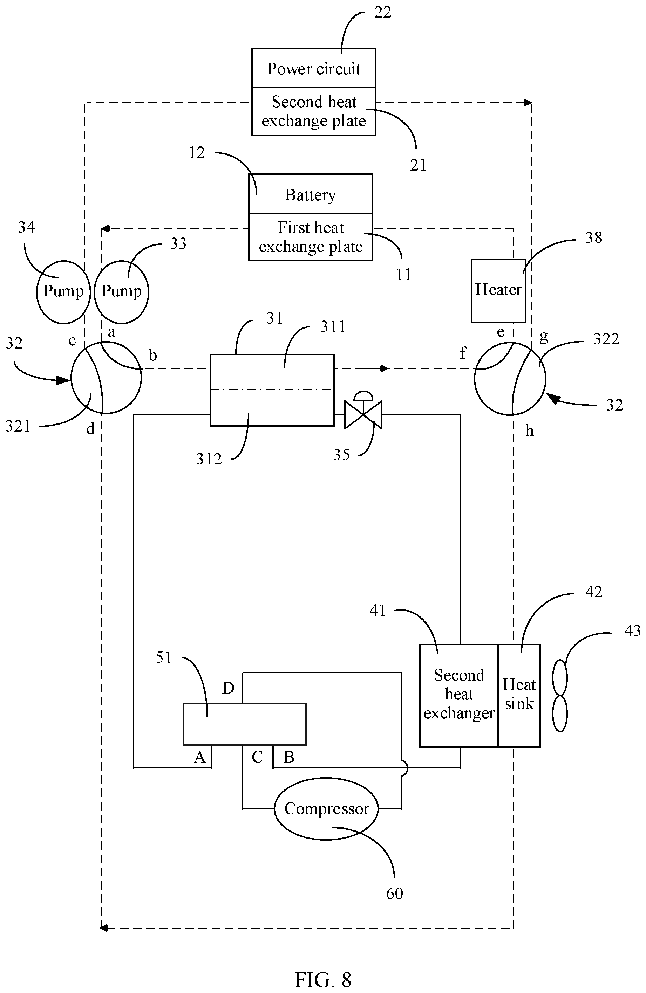

FIG. 8 is a diagram of a temperature control principle of a temperature control system in a heating state according to an embodiment. As shown in FIG. 8, when an external ambient temperature is low, and a temperature of the battery 12 can be increased through the electric heater 38, the battery 12 may be heated through only the electric heater 38. In this heating manner, the compressor 60 is in an off state. The first heat exchange plate 11 is located in a first heat exchange loop, and the second heat exchange plate 21 is located in a second heat exchange loop. For a specific connection manner of the first heat exchange loop and the second heat exchange loop, refer to the structure shown in FIG. 6. Details are not described herein again. In this heating manner, the electric heater 38 located between the first heat exchange plate 11 and the second four-way valve 322 may be directly used to heat a first heat exchange medium in the first heat exchange loop, to heat the battery 12. A first heat exchange medium in the second heat exchange loop may flow through the heat sink 42, and is naturally cooled through the heat sink 42.

As shown in FIG. 2 to FIG. 8, in the temperature control system according to embodiments of this application, the valve body assembly 32 is disposed, so that, during implementation of different heating modes or cooling modes, functions of heat exchange in manners of refrigerant cooling at a high temperature, heat pump heating at a low temperature, natural air cooling, electric heating, using the residual heat of the PCS, and the like can be implemented by only adjusting a communication manner of the valve body assembly 32 and a communication manner of the reversing valve 51 in the reversing assembly 50. The temperature control system has a simple connection manner, and can implement heat exchange through a plurality of manners by only presetting connection structures of a control valve and the reversing valve 51 in different heat exchange manners.

### Embodiment 2

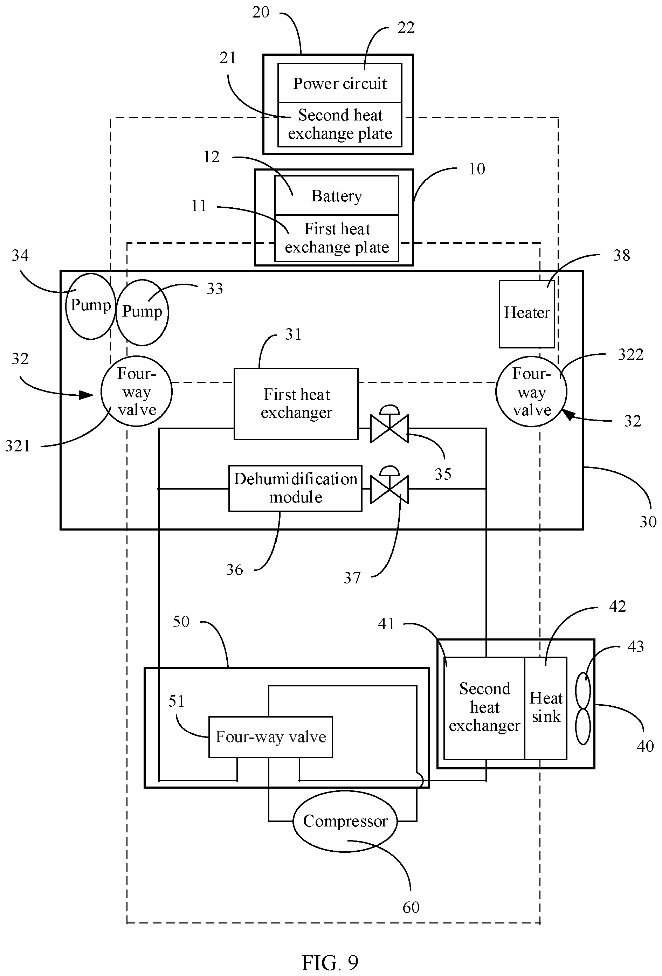

FIG. 9 is a diagram of a structure of a temperature control system. Refer to FIG. 2 and FIG. 9 together. A difference between the temperature control system in the embodiment shown in FIG. 9 and the temperature control system shown in FIG. 2 lies in that, in the temperature control system in the embodiment shown in FIG. 9, a heat management assembly 30 further includes a dehumidification module 36 and a second throttle valve 37 connected in series to a dehumidification assembly. The dehumidification module 36 and the first heat exchanger 31 may be disposed in parallel. The dehumidification module 36 is disposed in parallel between a third port and a fourth port of a first heat exchanger 31. Refer to FIG. 1 together. One end of the dehumidification module 36 may communicate with a seventh interface 307, and the other end of the dehumidification module 36 may communicate with an eighth interface 308. During heat exchange, a second heat exchange medium may be fed. To control a flow speed of the second heat exchange medium in the dehumidification module 36, the second throttle valve 37 may be disposed between the dehumidification module 36 and the seventh interface 307 or between the dehumidification module 36 and the eighth interface 308. The flow speed of the second heat exchange medium in the dehumidification module 36 is controlled through the second throttle valve 37.

The dehumidification module 36 may run synchronously with the first heat exchanger 31, or may run independently. The first heat exchanger 31 may also run independently. The foregoing function may be achieved by controlling degrees of closure of the first throttle valve 35 and the second throttle valve 37.

### Embodiment 3

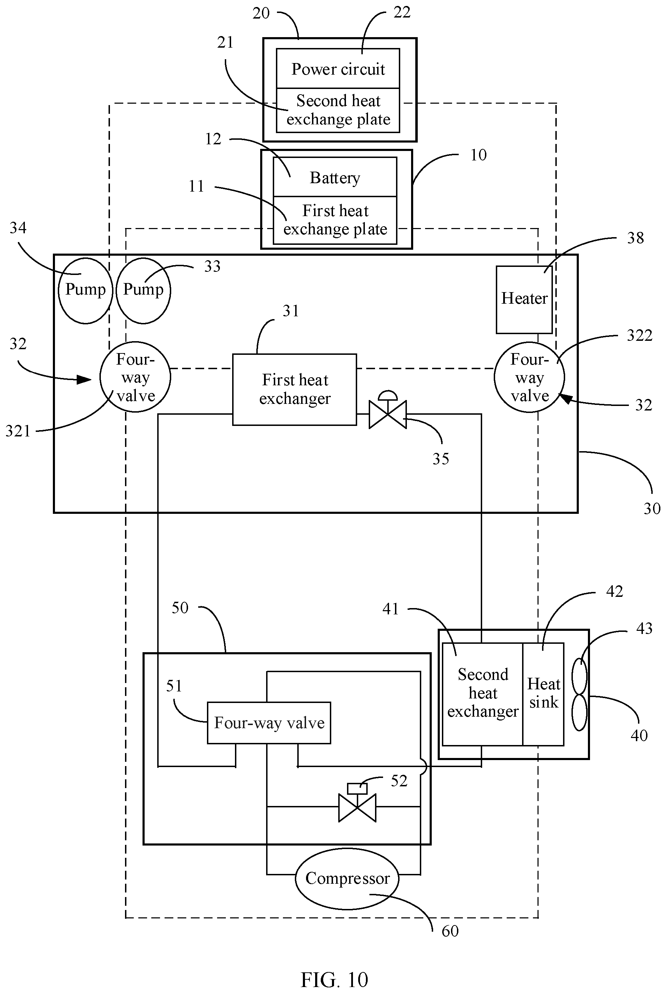

FIG. 10 is a diagram of a structure of a temperature control system. Refer to FIG. 2 and FIG. 10 together. A difference between the temperature control system in the embodiment shown in FIG. 10 and the temperature control system shown in FIG. 2 lies in that, in the temperature control system in the embodiment shown in FIG. 10, a reversing assembly 50 further includes a bypass valve 52. The bypass valve 52 is connected in parallel to a compressor 60. To be specific, one end of the bypass valve 52 is connected to a third valve port C of the reversing valve 51, and the other end of the bypass valve 52 is connected to a first valve port D of the reversing valve 51.

When the compressor 60 is in a heating state, the bypass valve 52 may be switched on to reduce pressure of the compressor 60, to prevent the compressor 60 from being faulty. When the compressor 60 is in a refrigerating state, the bypass valve 52 may be switched off.

### Embodiment 4

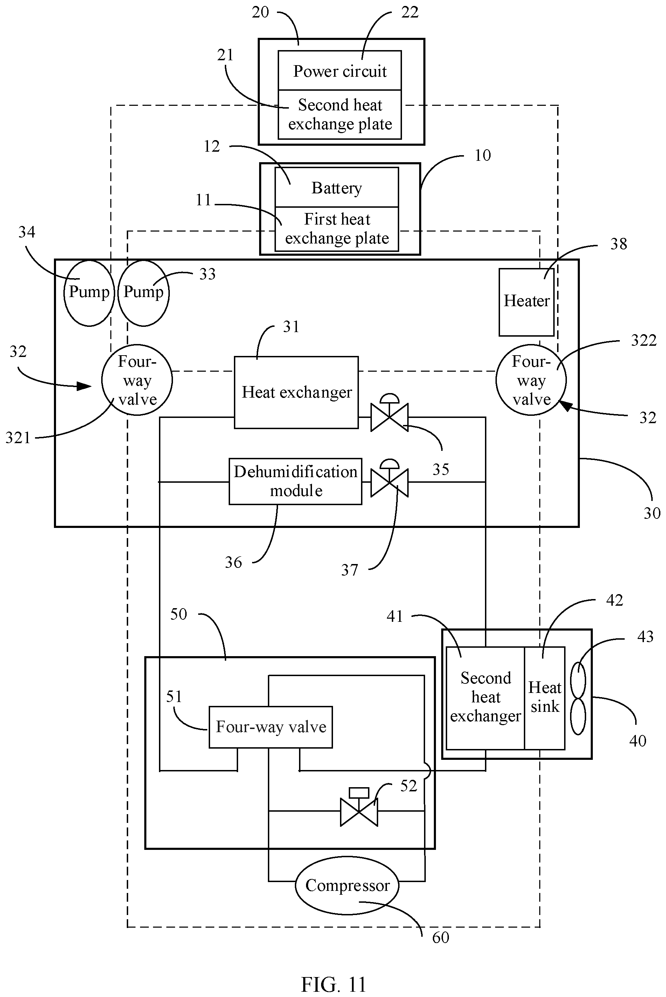

FIG. 11 is a diagram of a structure of a temperature control system. Refer to FIG. 2 and FIG. 11 together. A difference between the temperature control system in this embodiment of this application and the temperature control system shown in FIG. 2 lies in that a heat management assembly 30 further includes a dehumidification module 36 and a second throttle valve 37 connected in series to a dehumidification assembly. The reversing assembly 50 further includes a bypass valve 52.

As shown in FIG. 11, the dehumidification module 36 and a first heat exchanger 31 may be disposed in parallel. The dehumidification module 36 is disposed in parallel between a third port and a fourth port of the first heat exchanger 31. Refer to FIG. 1 together. One end of the dehumidification module 36 may communicate with a seventh interface 307, and the other end of the dehumidification module 36 may communicate with an eighth interface 308. During heat exchange, a second heat exchange medium may be fed. To control a flow speed of the second heat exchange medium in the dehumidification module 36, the second throttle valve 37 may be disposed between the dehumidification module 36 and the seventh interface 307 or between the dehumidification module 36 and the eighth interface 308. The flow speed of the second heat exchange medium in the dehumidification module 36 is controlled through the second throttle valve 37. The dehumidification module 36 may run synchronously with the first heat exchanger 31, or may run independently. The first heat exchanger 31 may also run independently. The foregoing function may be achieved by controlling degrees of closure of a first throttle valve 35 and the second throttle valve 37.

The bypass valve 52 is connected in parallel to a compressor 60. To be specific, one end of the bypass valve 52 is connected to a third valve port C of the reversing valve 51, and the other end of the bypass valve 52 is connected to a first valve port D of the reversing valve 51. When the compressor 60 is in a heating state, the bypass valve 52 may be switched on to reduce pressure of the compressor 60, to prevent the compressor 60 from being faulty. When the compressor 60 is in a refrigerating state, the bypass valve 52 may be switched off.

### Embodiment 5

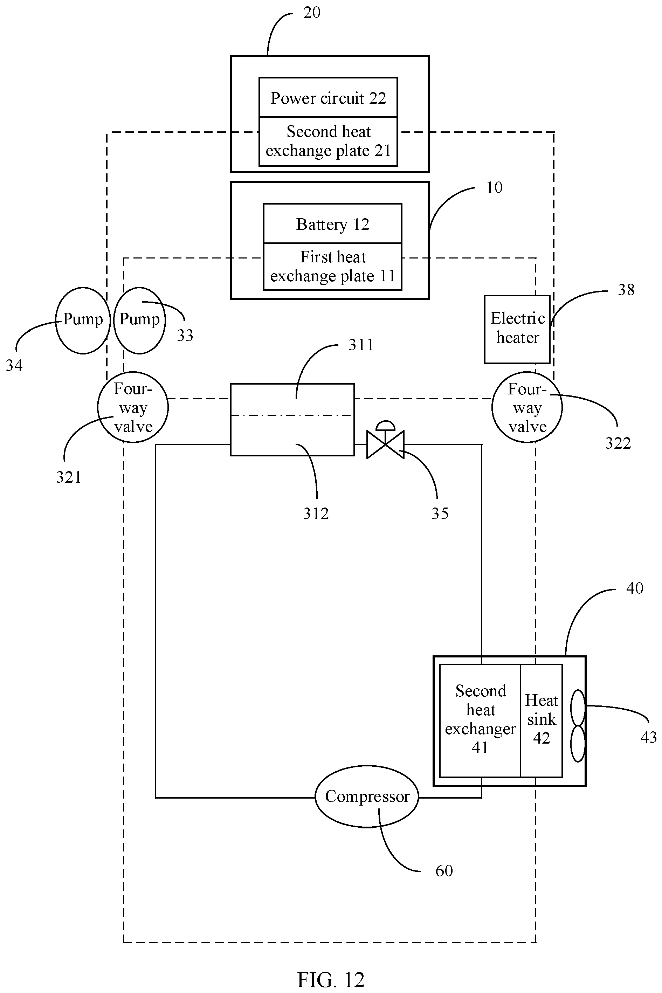

FIG. 12 is a diagram of a structure of a temperature control system. Refer to FIG. 2 and FIG. 12 together. A difference between the temperature control system in the embodiment shown in FIG. 12 and the temperature control system shown in FIG. 2 lies in that the temperature control system shown in FIG. 12 does not include a reversing assembly. The compressor 60 is directly connected in series to the second heat exchanger 41. Others are the same as those in the embodiment shown in FIG. 2. In this embodiment, during heat exchange, a flow direction of a heat exchange medium from the compressor to a second heat exchange channel remains unchanged.

### Embodiment 6

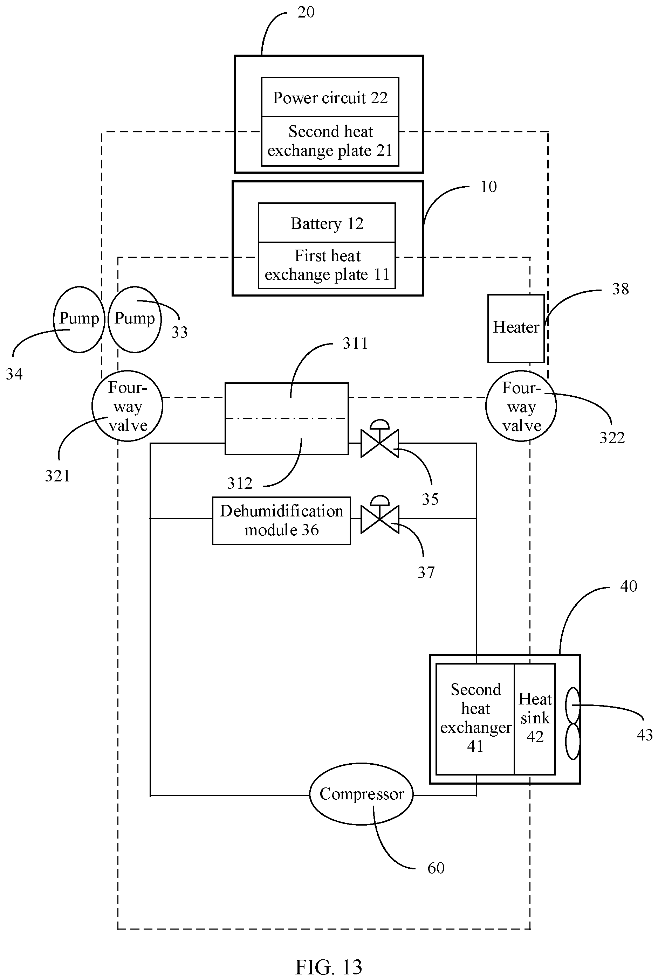

FIG. 13 is a diagram of a structure of a temperature control system. Refer to FIG. 9 and FIG. 13 together. A difference between the temperature control system in the embodiment shown in FIG. 13 and the temperature control system shown in FIG. 9 lies in that the temperature control system shown in FIG. 12 does not include a reversing assembly. A compressor 60 is directly connected in series to a second heat exchanger 41. Others are the same as those in the embodiment shown in FIG. 9. In this embodiment, during heat exchange, a flow direction of a heat exchange medium from the compressor 60 to a second heat exchange channel 312 remains unchanged.

### Embodiment 7

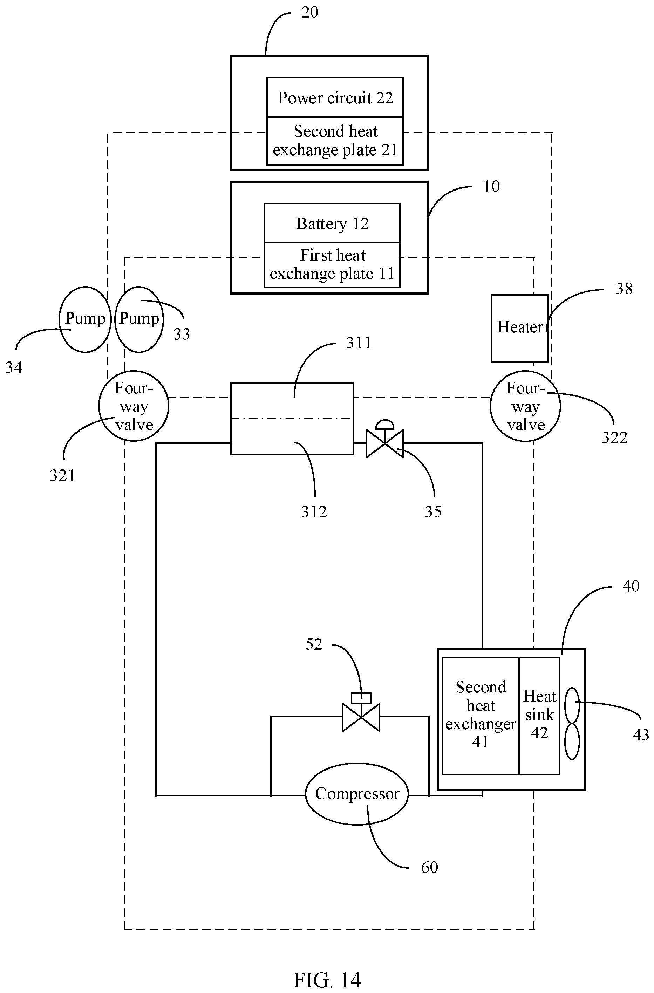

FIG. 14 is a diagram of a structure of a temperature control system. Refer to FIG. 10 and FIG. 14 together. A difference between the temperature control system in the embodiment shown in FIG. 14 and the temperature control system shown in FIG. 10 lies in that a reversing assembly in the temperature control system shown in FIG. 14 does not include a reversing valve, but includes only a bypass valve 52. A compressor 60 is directly connected in series to a second heat exchanger 41. Others are the same as those in the embodiment shown in FIG. 10. In this embodiment, during heat exchange, a flow direction of a heat exchange medium from the compressor 60 to a second heat exchange channel 312 remains unchanged.

### Embodiment 8

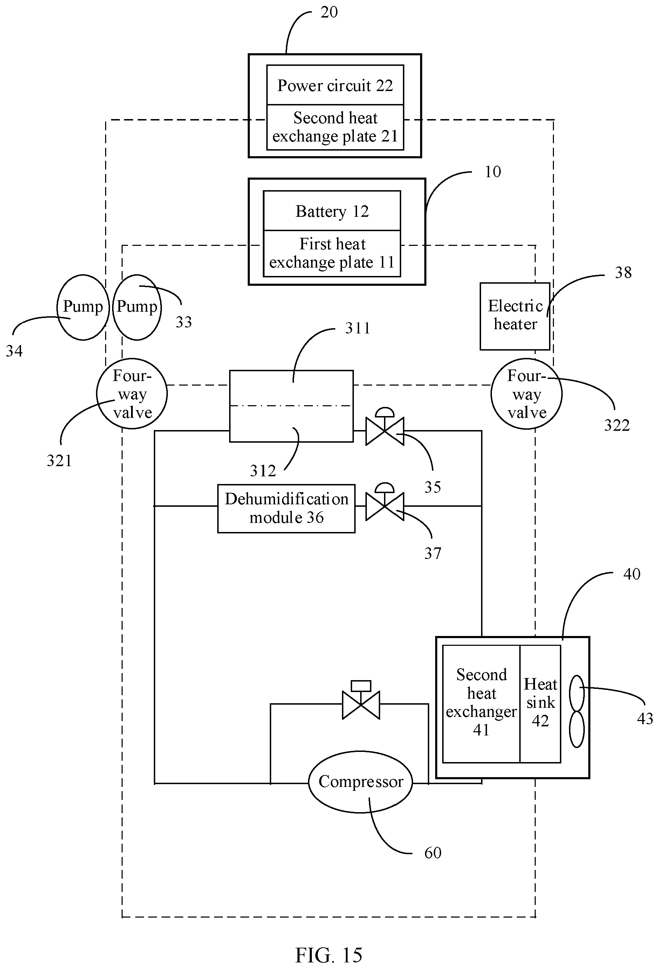

FIG. 15 is a diagram of a structure of a temperature control system. Refer to FIG. 11 and FIG. 15 together. A difference between the temperature control system in the embodiment shown in FIG. 15 and the temperature control system shown in FIG. 11 lies in that a reversing assembly in the temperature control system shown in FIG. 15 does not include a reversing valve, but includes only a bypass valve 52. A compressor 60 is directly connected in series to a second heat exchanger 41. Others are the same as those in the embodiment shown in FIG. 11. In this embodiment, during heat exchange, a flow direction of a heat exchange medium from the compressor 60 to a second heat exchange channel 312 remains unchanged.

### Embodiment 9

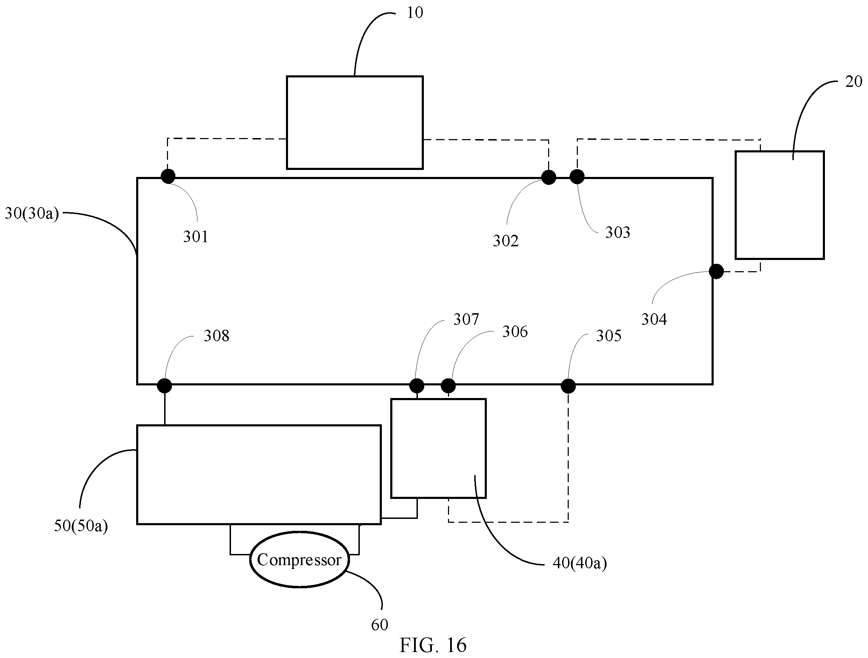

FIG. 16 is a diagram of a modular connection structure of a temperature control system according to another embodiment of this application. The temperature control system in this embodiment also includes a first load 10, a second load 20, a heat management assembly 30, a reversing assembly 50, and a heat dissipation assembly 40. Refer to FIG. 2 and FIG. 16 together. An external connection relationship among the first load 10, the second load 20, the heat management assembly 30, the reversing assembly 50, and the heat dissipation assembly 40 is the same as that in the temperature control system shown in FIG. 2.

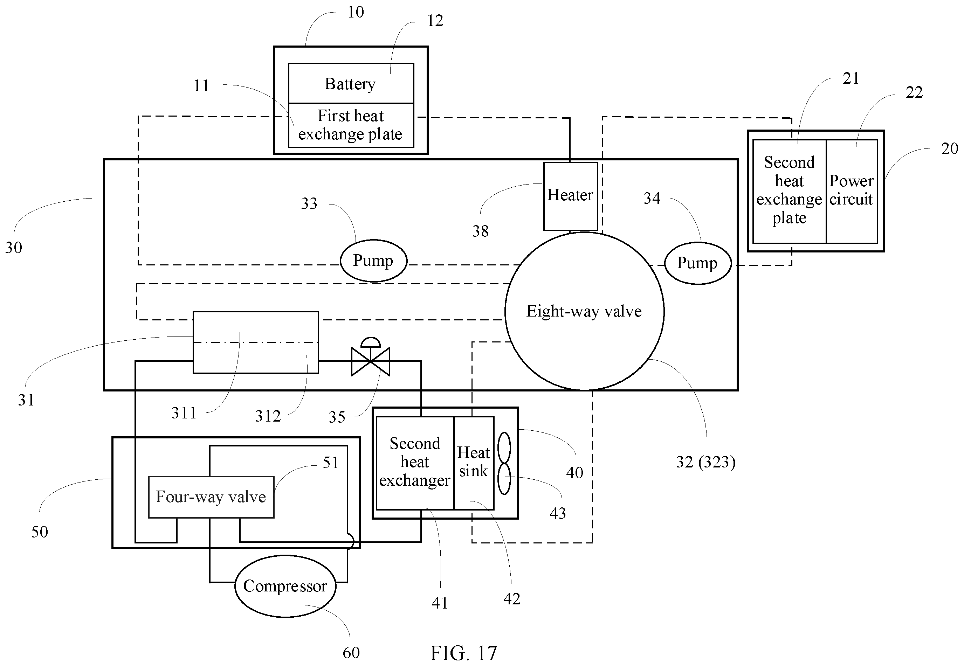

FIG. 17 is a diagram of a connection structure of a temperature control system. Refer to FIG. 2 and FIG. 17 together. A difference from the temperature control system shown in FIG. 2 lies in that the heat management assembly 30 in the temperature control system in this embodiment of this application includes one eight-way valve 323. Two four-way valves in the structure shown in FIG. 2 are replaced with the eight-way valve 323. Eight valve ports, namely, a valve port a, a valve port b, a valve port c, a valve port d, a valve port e, a valve port f, a valve port g, and a valve port h, of the eight-way valve 323 respectively correspond to eight valve ports, namely, a valve port a, a valve port b, a valve port c, a valve port d, a valve port e, a valve port f, a valve port g, and a valve port h of the two four-way valves in FIG. 3 to FIG. 8. For a heat exchange loop formed by connecting valve ports in different heat exchange manners, refer to the heat exchange loop in FIG. 3 to FIG. 8. In this way, a heat exchange effect that is the same as that in FIG. 3 to FIG. 8 can be obtained. Details are not described herein again.

### Embodiment 10

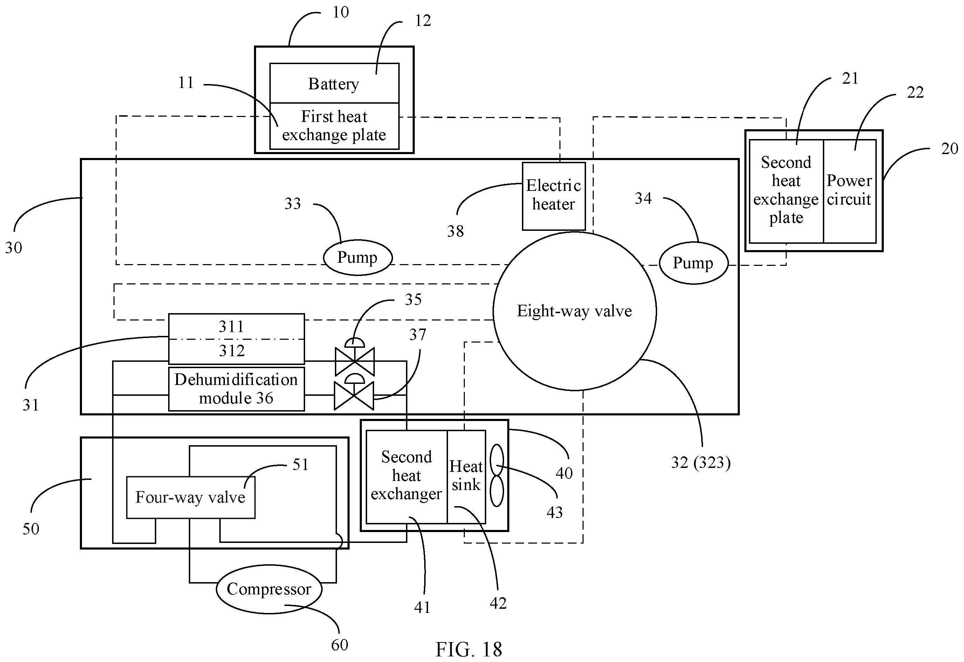

FIG. 18 is a diagram of a structure of a temperature control system. Refer to FIG. 17 and FIG. 18 together. A difference from the temperature control system shown in FIG. 17 lies in that, in the temperature control system in this embodiment, a heat management assembly 30 includes a dehumidification module 36 and a second throttle valve 37 connected to the dehumidification module 36. A specific manner of disposing the dehumidification module 36 and the throttle valve is the same as that in Embodiment 2. Details are not described herein again.

### Embodiment 11

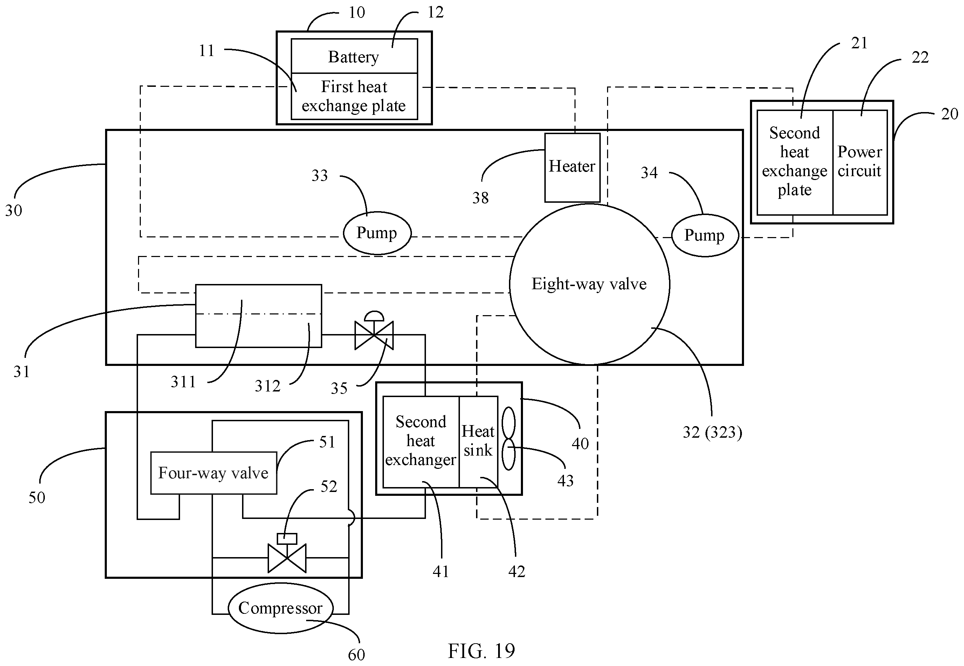

FIG. 19 is a diagram of a structure of a temperature control system. Refer to FIG. 17 and FIG. 19 together. A difference from the temperature control system shown in FIG. 17 lies in that, in the temperature control system in this embodiment, a reversing assembly 50 includes a bypass valve 52. A specific manner of disposing the bypass valve 52 is the same as that in Embodiment 3. Details are not described herein again.

### Embodiment 12

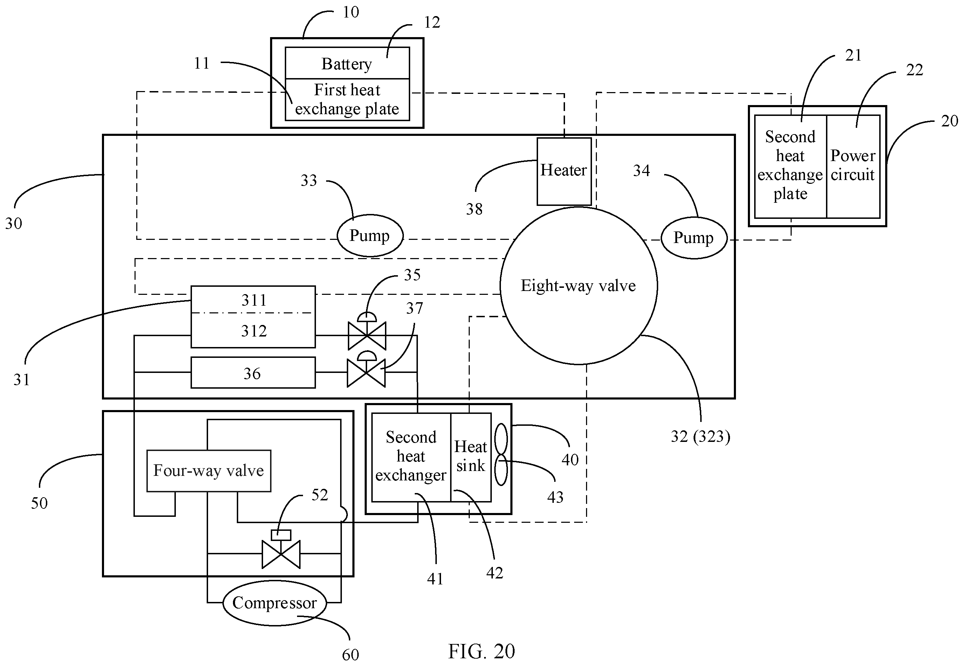

FIG. 20 is a diagram of a structure of a temperature control system. Refer to FIG. 17 and FIG. 20 together. A difference from the temperature control system shown in FIG. 13 lies in that, in the temperature control system in this embodiment, a heat management assembly 30 includes a dehumidification module 36 and a second throttle valve 37, and that a bypass valve 52 is further disposed in a reversing assembly 50. A specific manner of disposing the dehumidification module 36 and the throttle valve is the same as that in Embodiment 2, and a manner of disposing the bypass valve 52 is the same as that in Embodiment 3. Details are not described herein again.

### Embodiment 13

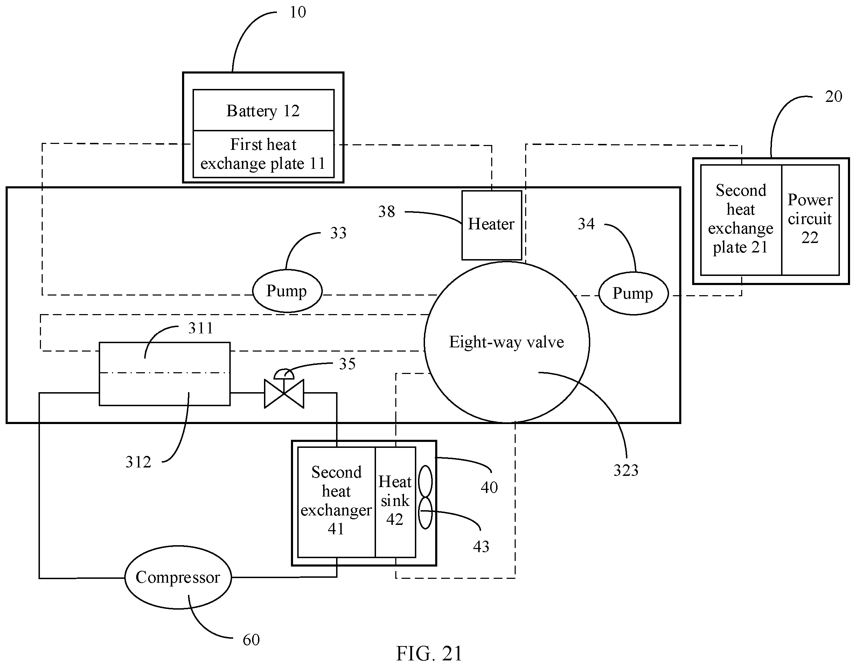

FIG. 21 is a diagram of a structure of a temperature control system. Refer to FIG. 17 and FIG. 21 together. A difference between the temperature control system in the embodiment shown in FIG. 21 and the temperature control system shown in FIG. 17 lies in that the temperature control system shown in FIG. 21 does not include a reversing assembly. A compressor 60 is directly connected in series to a second heat exchanger 41. Others are the same as those in the embodiment shown in FIG. 17. In this embodiment, during heat exchange, a flow direction of a heat exchange medium from the compressor to a second heat exchange channel remains unchanged.

### Embodiment 14

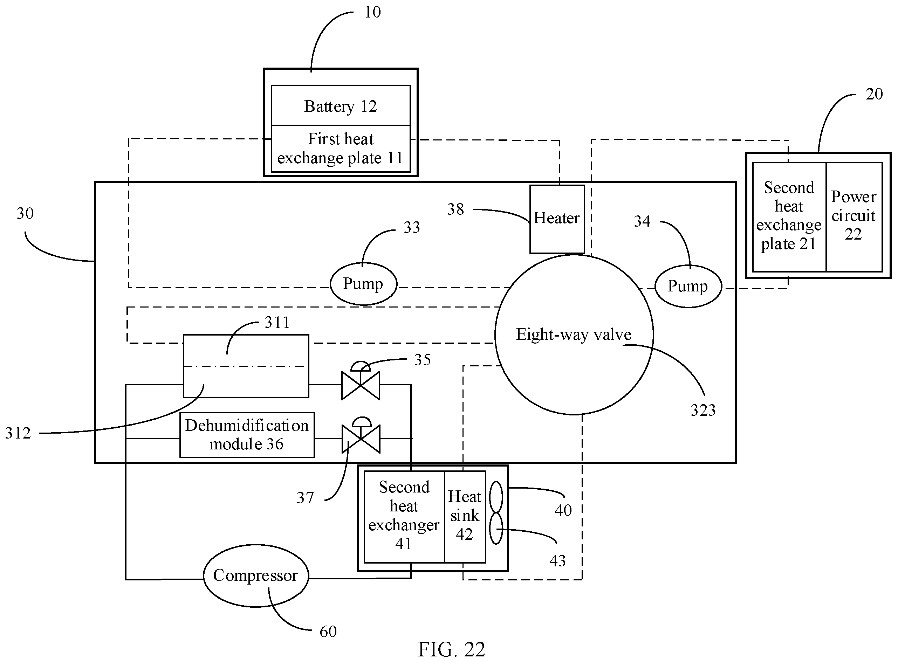

FIG. 22 is a diagram of a structure of a temperature control system. Refer to FIG. 18 and FIG. 22 together. A difference between the temperature control system in the embodiment shown in FIG. 22 and the temperature control system shown in FIG. 18 lies in that the temperature control system shown in FIG. 22 does not include a reversing assembly. A compressor 60 is directly connected in series to a second heat exchanger 41. Others are the same as those in the embodiment shown in FIG. 18. In this embodiment, during heat exchange, a flow direction of a heat exchange medium from the compressor to a second heat exchange channel remains unchanged.

### Embodiment 15

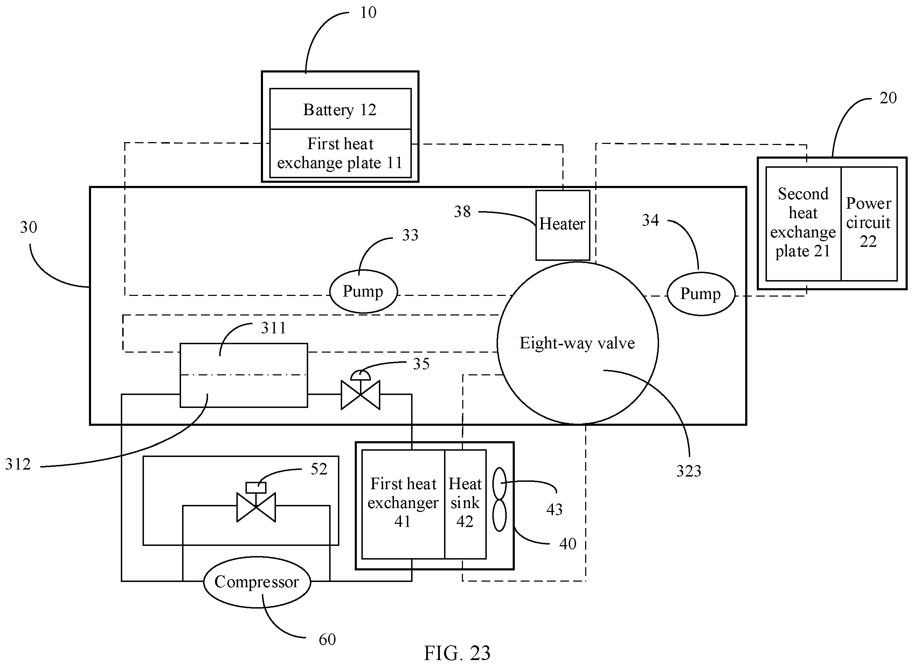

FIG. 23 is a diagram of a structure of a temperature control system. Refer to FIG. 19 and FIG. 23 together. A difference between the temperature control system in the embodiment shown in FIG. 23 and the temperature control system shown in FIG. 19 lies in that a reversing assembly in the temperature control system shown in FIG. 23 does not include a reversing valve, but includes only a bypass valve 52. A compressor 60 is directly connected in series to a second heat exchanger 41. Others are the same as those in the embodiment shown in FIG. 19. In this embodiment, during heat exchange, a flow direction of a heat exchange medium from the compressor to a second heat exchange channel remains unchanged.

### Embodiment 16

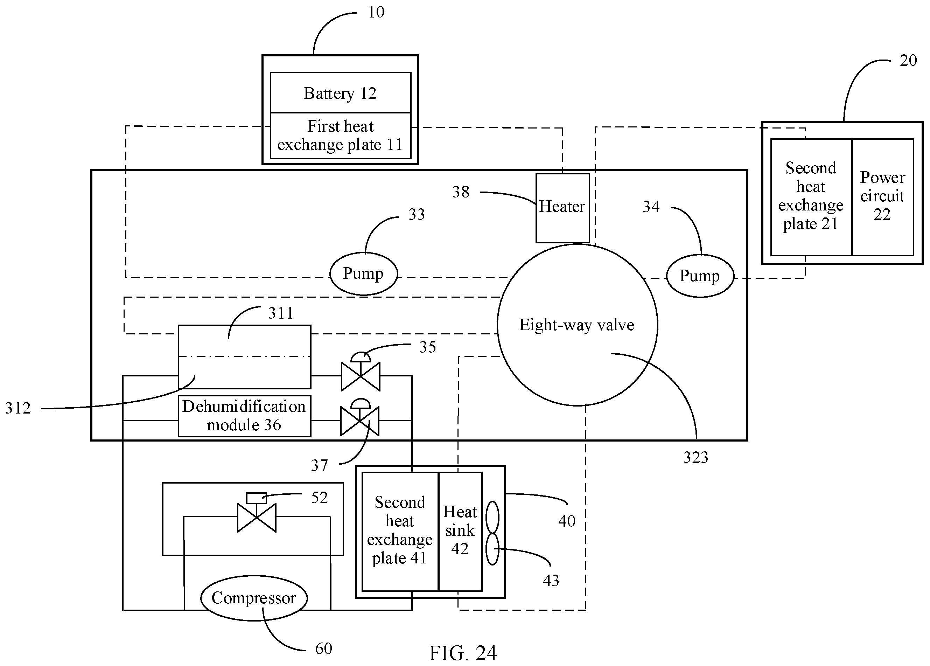

FIG. 24 is a diagram of a structure of a temperature control system. Refer to FIG. 20 and FIG. 24 together. A difference between the temperature control system in the embodiment shown in FIG. 24 and the temperature control system shown in FIG. 20 lies in that a reversing assembly in the temperature control system shown in FIG. 24 does not include a reversing valve, but includes only a bypass valve 52. A compressor 60 is directly connected in series to a second heat exchanger 41. Others are the same as those in the embodiment shown in FIG. 20. In this embodiment, during heat exchange, a flow direction of a heat exchange medium from the compressor to a second heat exchange channel remains unchanged.

Refer to the structures shown in FIG. 1, FIG. 2, and FIG. 9 to FIG. 12 together. In the structure, a heat management assembly 30 may be provided with a first housing 30a. A first heat exchanger 31, a valve body assembly 32, an electric heater 38, a first pump 33, a second pump 34, a first throttle valve 35, a dehumidification module 36, and a second throttle valve 37 are all disposed in the first housing 30a. Each interface of the heat management assembly 30 is provided on the first housing 30a.

A heat dissipation assembly 40 may be provided with a second housing 40a, and the second heat exchanger 41 and a heat sink 42 are disposed in the second housing 40a. The second housing 40a is provided with two pairs of interfaces. One pair of interfaces communicates with the second heat exchanger 41, and the other pair of interfaces communicates with the heat sink 42.

A reversing assembly 50 may be provided with a third housing, and a reversing valve 51 and a bypass valve 52 are disposed in the third housing 50a. The third housing 50a is provided with four connection ports, and valve ports of the reversing valve 51 are connected to the connection ports of the third housing 50a in a one-to-one correspondence. The bypass valve 52 is connected to two of the connection ports and is connected in parallel to two valve ports of the reversing valve 51.

As shown in FIG. 1 to FIG. 24, the temperature control system in embodiments of this application may be pre-assembled in a modular connection manner. This facilitates on-site mounting of an energy storage apparatus. In addition, during adjustment between different heat exchange modes, the valve body assembly 32 and the reversing valve 51 can be switched only by selecting a preset mode as required, so that different heating and cooling modes can be implemented.

It may be understood that, in embodiments of this application, in addition to the including the four-way valve and the eight-way valve, a combination of the valve body assembly may further include another connection form, for example, a combination of different quantities of valve ports (two-way valves or three-way valves) and different quantities of connection pipes (two-way pipes or three-way pipes), to connect or disconnect a connection passage among the first heat exchange component, the second heat exchange component, the first heat exchange channel, and the heat sink, thereby forming a plurality of heat exchange paths. In this case, the valve body assembly in this application may be a combination of valve ports in a plurality of structural forms and connection pipes in a plurality of structural forms. Similarly, in addition to the structural combination in embodiments of this application, the reversing assembly may further be a combination of a reversing valve in another structural form and a reversing pipe in another structural form.

In the energy storage apparatus in this application, a first load is a battery module. A temperature of the energy storage apparatus may be controlled by using the temperature control system in this application, so that a battery in the energy storage apparatus is always at an operating temperature state.

It may be understood that the energy storage apparatus in this application may further include a cabinet body, and components such as the first load, a second load, a heat management assembly, a heat dissipation assembly, a reversing assembly, and a compressor may all be disposed in the cabinet body.

During actual application, the energy storage apparatus may be used in scenarios such as home energy storage, industrial energy storage, a data center, and a vehicle, and is configured to store and release electric energy.

For example, an embodiment of this application further provides a photovoltaic energy storage system, including a power generation device, a power conversion device, and the energy storage apparatus in embodiments of this application. The power conversion device is connected between the power generation device and the energy storage apparatus. The power generation device is configured to store generated electric energy into a battery of the energy storage apparatus through the power conversion device.

In addition, the photovoltaic energy storage system may further include a battery management system. The battery management system may effectively detect parameters such as a temperature, a state of charge, and a health status of the battery, and may further effectively regulate charging and discharging functions of the battery, to ensure normal operation of an energy storage device.

Alternatively, an embodiment of this application further provides a power station, which may include a power generation device and a battery. The power generation device is electrically connected to the battery, and the power generation device is configured to store generated electric energy in the battery. The battery is used, so that safety and a deployment difficulty of the power station can be effectively improved.

During specific application, the power generation device may be a photovoltaic power generation device, a wind energy power generation device, or the like. A specific type of the power generation device is not limited in this application. In addition, during actual application, the power generation device may be connected to the battery through a power distribution cabinet. The power distribution cabinet may include a direct current-alternating current conversion component, or may include a component, for example, a transformer, so that the electric energy generated by the power generation device is effectively transmitted to the battery for storage. During specific disposition, a quantity and a type of components in the power distribution cabinet may be properly specified according to an actual requirement. This is not limited in this application.

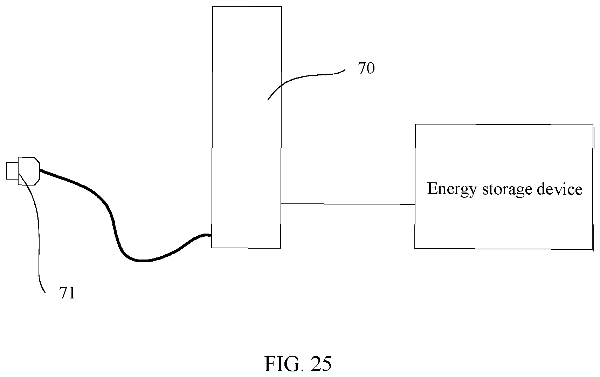

Alternatively, as shown in FIG. 25, an embodiment of this application further provides a charging network, including a charging pile 70 and a battery. The charging pile 70 is electrically connected to the battery through a cable, and the battery may provide electric energy stored in the battery for the charging pile 70. The charging pile 70 has a connector 71, and the connector 71 may be connected to a powered device (for example, a vehicle), to supplement energy to the powered device. The battery is used, so that safety of the charging network can be effectively improved, and this further helps improve flexibility of deploying the charging network.

During specific disposition, the charging network may include a plurality of batteries and a plurality of charging piles 70, and each battery may provide electric energy for the plurality of charging piles 70, so that deployment flexibility can be effectively improved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage apparatus, comprising a first load, a second load, a heat management assembly, a heat dissipation assembly, and a compressor, wherein
a first heat exchange component is disposed in the first load, and a second heat exchange component is disposed in the second load;
the heat management assembly is provided with at least four pairs of interfaces, and comprises a first heat exchanger and a valve body assembly, the first heat exchanger comprises a first heat exchange channel and a second heat exchange channel, the first heat exchange channel is connected to the valve body assembly, the first heat exchange component is connected to the valve body assembly through a first pair of interfaces, and the second heat exchange component is connected to the valve body assembly through a second pair of interfaces;
the heat dissipation assembly comprises a heat sink and a second heat exchanger, and the heat sink is connected to the valve body assembly through a third pair of interfaces;
the compressor is connected in series to the second heat exchanger, and the compressor and the second heat exchanger are connected in series to the second heat exchange channel through a fourth pair of interfaces; and
the valve body assembly is provided with a plurality of valve ports that are switchable for communication, to connect or disconnect a connection passage among the first heat exchange component, the second heat exchange component, the first heat exchange channel, and the heat sink, to form a plurality of heat exchange paths.

2. The energy storage apparatus according to claim 1, wherein the valve body assembly comprises a first four-way valve and a second four-way valve, three of four valve ports of each of the first four-way valve and the second four-way valve are respectively connected to an interface for connecting to the first heat exchange component, an interface for connecting to the second heat exchange component, and an interface for connecting to the heat sink, and one remaining valve port of the four valve ports of each of the first four-way valve and the second four-way valve is connected to one end of the first heat exchange channel.

3. The energy storage apparatus according to claim 2, wherein the heat management assembly comprises at least four operating states, wherein
the heat management assembly is in a first operating state, one end of the first heat exchange component is connected to one end of the first heat exchange channel through the first four-way valve, the other end of the first heat exchange component is connected to the other end of the first heat exchange channel through the second four-way valve, one end of the second heat exchange component is connected to one end of the heat sink through the first four-way valve, and the other end of the second heat exchange component is connected to the other end of the heat sink through the second four-way valve;
the heat management assembly is in a second operating state, one end of the first heat exchange component is connected to one end of the heat sink through the first four-way valve, the other end of the first heat exchange component is connected to one end of the second heat exchange component through the second four-way valve, the other end of the second heat exchange component is connected to one end of the first heat exchange channel through the first four-way valve, and the other end of the first heat exchange channel is connected to the other end of the heat sink through the second four-way valve;
the heat management assembly is in a third operating state, one end of the first heat exchange component is connected to one end of the second heat exchange component through the first four-way valve, the other end of the second heat exchange component is connected to the other end of the first heat exchange component through the second four-way valve, one end of the first heat exchange channel is connected to one end of the heat sink through the first four-way valve, and the other end of the first heat exchange channel is connected to the other end of the heat sink through the second four-way valve; or
the heat management assembly is in a fourth operating state, one end of the first heat exchange component is connected to one end of the first heat exchange channel through the first four-way valve, the other end of the first heat exchange component is connected to one end of the second heat exchange component through the second four-way valve, the other end of the second heat exchange component is connected to one end of the heat sink through the first four-way valve, and the other end of the heat sink is connected to the other end of the first heat exchange channel through the second four-way valve.

4. The energy storage apparatus according to claim 2, wherein the valve body assembly comprises one eight-way valve, and two ends of the heat sink, two ends of the first heat exchange component, two ends of the second heat exchange component, and two ends of the first heat exchange channel are connected to eight valve ports of the eight-way valve in a one-to-one correspondence.

5. The energy storage apparatus according to claim 4, wherein the heat management assembly comprises at least four operating states, wherein
the heat management assembly is in a first operating state, one end of the first heat exchange component is connected to one end of the first heat exchange channel through the eight-way valve, the other end of the first heat exchange component is connected to the other end of the first heat exchange channel through the eight-way valve, one end of the second heat exchange component is connected to one end of the heat sink through the eight-way valve, and the other end of the second heat exchange component is connected to the other end of the heat sink through the eight-way valve;
the heat management assembly is in a second operating state, one end of the first heat exchange component is connected to one end of the heat sink through the eight-way valve, the other end of the first heat exchange component is connected to one end of the second heat exchange component through the eight-way valve, the other end of the second heat exchange component is connected to one end of the first heat exchange channel through the eight-way valve, and the other end of the first heat exchange channel is connected to the other end of the heat sink through the eight-way valve;
the heat management assembly is in a third operating state, one end of the first heat exchange component is connected to one end of the second heat exchange component through the eight-way valve, the other end of the second heat exchange component is connected to the other end of the first heat exchange component through the eight-way valve, one end of the first heat exchange channel is connected to one end of the heat sink through the eight-way valve, and the other end of the first heat exchange channel is connected to the other end of the heat sink through the eight-way valve; or
the heat management assembly is in a fourth operating state, one end of the first heat exchange component is connected to one end of the first heat exchange channel through the eight-way valve, the other end of the first heat exchange component is connected to one end of the second heat exchange component through the eight-way valve, the other end of the second heat exchange component is connected to one end of the heat sink through the eight-way valve, and the other end of the heat sink is connected to the other end of the first heat exchange channel through the eight-way valve.

6. The energy storage apparatus according to any one of claims 2 to 5, wherein the heat management assembly further comprises a first pump and a second pump, the first pump is disposed between the first heat exchange component and the valve body assembly, and the second pump is disposed between the second heat exchange component and the valve body assembly.

7. The energy storage apparatus according to any one of claims 2 to 6, wherein the heat management assembly further comprises a heater, and the heater is disposed between the first heat exchange component and the valve body assembly.

8. The energy storage apparatus according to any one of claims 1 to 7, wherein the heat management assembly further comprises a first throttle valve, and the first throttle valve is connected in series to the second heat exchange channel; and
the heat management module further comprises a dehumidification module and a second throttle valve, the dehumidification module and the first heat exchanger are disposed in parallel, and the dehumidification module is connected in series to the second throttle valve.

9. The energy storage apparatus according to any one of claims 1 to 8, wherein the temperature control system further comprises a reversing assembly, the compressor is connected in series to the second heat exchanger through the reversing assembly, and the reversing assembly has at least two switchable medium flow paths to change a flow direction of a heat exchange medium flowing from the compressor to the second heat exchange channel.

10. The energy storage apparatus according to claim 9, wherein the reversing assembly comprises a reversing valve, the reversing valve is provided with a first valve port, a second valve port, a third valve port, and a fourth valve port, the first valve port is connected to the heat management assembly, the second valve port is connected to the second heat exchanger, and the third valve port and the fourth valve port are respectively connected to two ends of the compressor;
wherein
the reversing assembly is in a first operating state, the first valve port is connected to the third valve port, and the second valve port is connected to the fourth valve port; or
the reversing assembly is in a second operating state, the first valve port is connected to the fourth valve port, and the second valve port is connected to the third valve port.

11. The energy storage apparatus according to claim 9 or 10, wherein the reversing assembly further comprises a bypass valve connected in parallel to the compressor.

12. The energy storage apparatus according to any one of claims 1 to 11, wherein the heat management assembly is provided with a first housing, the first heat exchanger, the valve body assembly, an electric heater, the first pump, the second pump, the first throttle valve, the dehumidification module, and the second throttle valve are all disposed in the first housing, and the at least four pairs of interfaces are disposed on the first housing;
the heat dissipation assembly is provided with a second housing, the second heat exchanger and the heat sink are disposed in the second housing, and the second housing is provided with two pairs of interfaces, wherein one pair of interfaces communicates with the second heat exchanger, and the other pair of interfaces communicates with the heat sink; and
the reversing assembly is provided with a third housing, the reversing valve and the bypass valve are disposed in the third housing, the third housing is provided with four connection ports, valve ports of the reversing valve are connected to the connection ports of the third housing in a one-to-one correspondence, and the bypass valve is connected to two of the connection ports and is connected in parallel to two valve ports of the reversing valve.

13. The energy storage apparatus according to claim 12, wherein the compressor is integrated into the first housing, and the first housing is provided with an interface for communicating with the compressor; or the compressor is integrated into the third housing, and the third housing is provided with an interface for communicating with the compressor.

14. A photovoltaic energy storage system, comprising a power generation device, a power conversion device, and the energy storage apparatus according to any one of claims 1 to 13, wherein the power conversion device is connected between the power generation device and the energy storage apparatus, and the power generation device is configured to store generated electric energy into a battery of the energy storage apparatus through the power conversion device.

15. A charging network, comprising a charging pile and the energy storage apparatus according to any one of claims 1 to 13, wherein the charging pile is electrically connected to the energy storage apparatus, and the energy storage apparatus is configured to provide electric energy for the charging pile.
